(19) Europäisches Patentamt
European Patent Office
Office européen des brevets

(11) **EP 4 742 677 A1**

(12) **EUROPEAN PATENT APPLICATION**
published in accordance with Art. 153(4) EPC

(43) Date of publication:
**13.05.2026 Bulletin 2026/20**

(21) Application number: **24836349.1**

(22) Date of filing: **04.07.2024**

(51) International Patent Classification (IPC):
*H04N 19/597* (2014.01)    *H04N 19/119* (2014.01)
*H04N 19/70* (2014.01)    *H04N 19/423* (2014.01)
*H04N 19/184* (2014.01)

(52) Cooperative Patent Classification (CPC):
**H04N 19/119; H04N 19/184; H04N 19/423;**
**H04N 19/597; H04N 19/70**

(86) International application number:
**PCT/KR2024/009449**

(87) International publication number:
**WO 2025/009902 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.07.2023 US 202363524914 P**

(71) Applicant: **LG Electronics Inc.**
**Yeongdeungpo-gu**
**Seoul 07336 (KR)**

(72) Inventor: **OH, Hyunmook**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57) A point cloud data decoding method according to embodiments may comprise the steps of: receiving a bitstream including point cloud data; and decoding the point cloud data. A point cloud data encoding method according to embodiments may comprise the steps of: encoding point cloud data; and transmitting a bitstream including the point cloud data.

FIG. 1

**Description**

[Technical Field]

Embodiments relate to methods and devices for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

A method of decoding point cloud data according to embodiments may include receiving a bitstream containing point cloud data, and decoding the point cloud data. A method of encoding point cloud data according to embodiments may include encoding point cloud data, and transmitting a bitstream containing the point cloud data.

[Advantageous Effects]

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.

FIG. 1 shows an exemplary point cloud content providing system according to embodiments;
FIG. 2 is a block diagram illustrating a point cloud content providing operation according to embodiments;
FIG. 3 illustrates an exemplary point cloud encoder according to embodiments;
FIG. 4 shows an example of an octree and occupancy code according to embodiments;
FIG. 5 illustrates an example of point configuration in each LOD according to embodiments;
FIG. 6 illustrates an example of point configuration in each LOD according to embodiments;
FIG. 7 illustrates a point cloud decoder according to embodiments;
FIG. 8 illustrates a transmission device according to embodiments;
FIG. 9 illustrates a reception device according to embodiments;
FIG. 10 illustrates an exemplary structure operable in connection with point cloud data transmission/reception methods/devices according to embodiments;
FIG. 11 illustrates a process of encoding, transmitting, and decoding point cloud data according to embodiments;

FIG. 12 illustrates a layer-based point cloud data configuration according to embodiments;

FIG. 13 illustrates a structure of geometry and attribute bitstreams according to embodiments;

FIG. 14 illustrates bitstream configurations according to embodiments and a bitstream sorting method according to embodiments;

FIG. 15 illustrates a bitstream sorting method according to embodiments;

FIG. 16 illustrates a bitstream sorting method according to embodiments;

FIG. 17 illustrates a method of selecting geometry data and attribute data according to embodiments;

FIG. 18 illustrates a method of selecting a bitstream according to embodiments;

FIG. 19 illustrates a method of configuring slices containing point cloud data according to embodiments;

FIG. 20 illustrates a geometry tree structure based on a single slice and segmented slices according to embodiments;

FIG. 21 illustrates a layer group structure of a geometry coding tree and an aligned layer group structure of an attribute coding tree according to embodiments;

FIG. 22 illustrates a layer group and sub-group structure according to embodiments;

FIG. 23 illustrates an example of context reference between layer groups according to embodiments;

FIG. 24 illustrates an example of context reference between groups according to embodiments;

FIG. 25 illustrates an example of context buffer management according to embodiments;

FIG. 26 illustrates an example of context buffer management according to embodiments;

FIG. 27 illustrates an example of context buffer management according to embodiments;

FIG. 28 shows a table comparing context memory usage of a context buffer according to embodiments;

FIG. 29 shows a table comparing context memory usage of a context buffer according to embodiments;

FIG. 30 is a table showing results of context buffer management according to embodiments;

FIG. 31 is a table showing results of context buffer management according to embodiments;

FIG. 32 illustrates a context buffer release method according to embodiments;

FIG. 33 illustrates a context buffer release method according to embodiments;

FIG. 34 illustrates a context memory management method according to embodiments;

FIG. 35 illustrates a bitstream containing point cloud data according to embodiments;

FIG. 36 illustrates a sequence parameter set of a bitstream according to embodiments;

FIG. 37 illustrates a dependent geometry data unit header of a bitstream according to embodiments;

FIG. 38 illustrates a dependent attribute data unit header of a bitstream according to embodiments;

FIGs. 39A and 39B illustrate a layer group structure inventory according to embodiments;

FIG. 40 illustrates a point cloud data transmission device/method according to embodiments;

FIG. 41 illustrates a point cloud data reception device/method according to embodiments;

FIG. 42 illustrates a point cloud data reception method according to embodiments;

FIG. 43 illustrates a layer group-based point cloud data encoding method according to embodiments;

FIG. 44 illustrates a layer group-based point cloud data decoding method according to embodiments;

FIGS. 45 and 46 illustrate a point cloud data transmission/reception device/method according to embodiments;

FIG. 47 illustrates a point cloud data transmission/reception device/method according to embodiments;

FIG. 48 illustrates a point cloud data transmission/reception device/method according to embodiments;

FIG. 49 illustrates a point cloud data encoding method according to embodiments; and

FIG. 50 illustrates a point cloud data decoding method according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

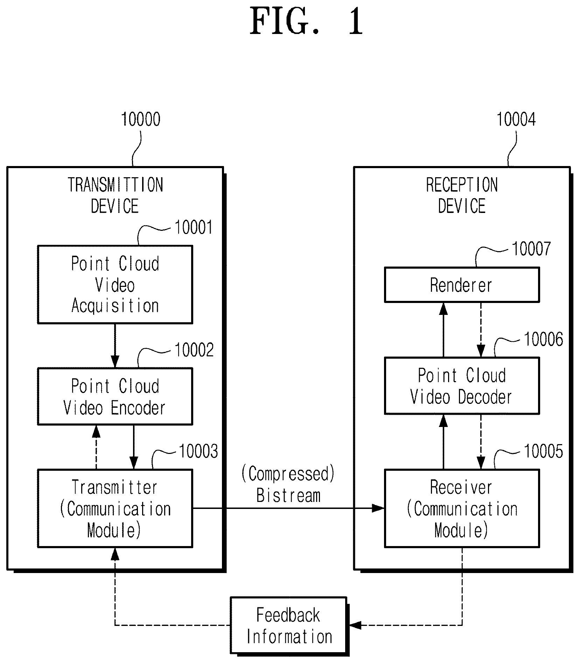

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

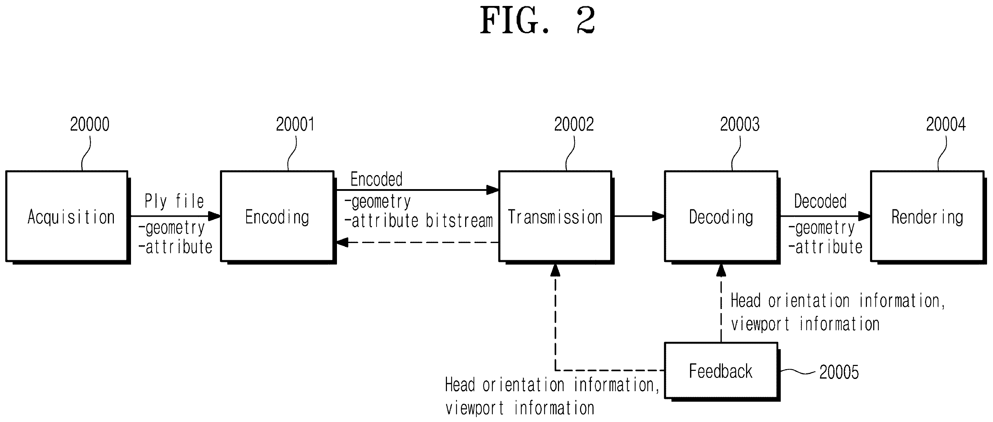

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

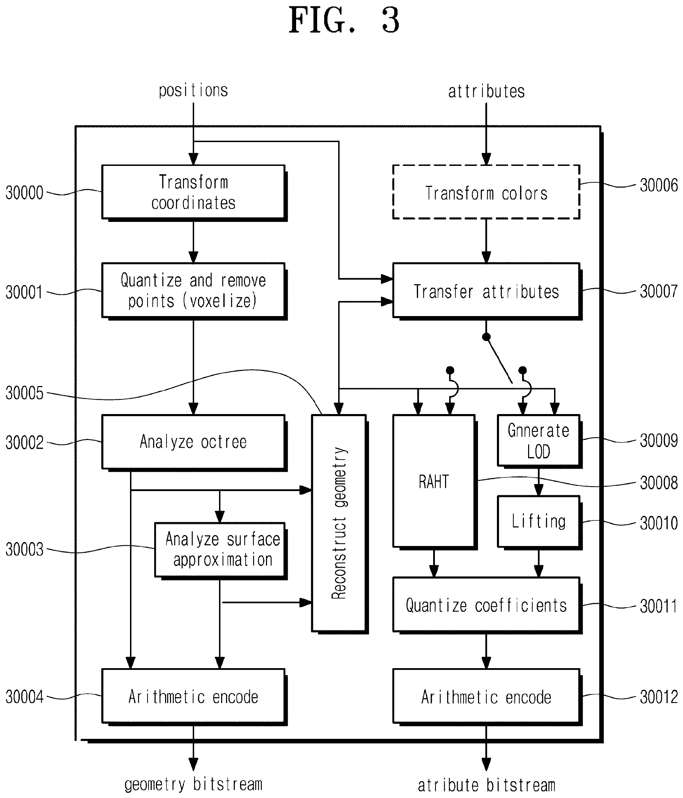

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 30000, a quantizer (Quantize and remove points (voxelize)) 30001, an octree analyzer (Analyze octree) 30002, and a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transform attributes) 30007, a RAHT transformer (RAHT) 30008, an LOD generator (Generate LOD) 30009, a lifting transformer (Lifting) 30010, a coefficient quantizer (Quantize coefficients) 30011, and/or an arithmetic encoder (Arithmetic encode) 30012.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

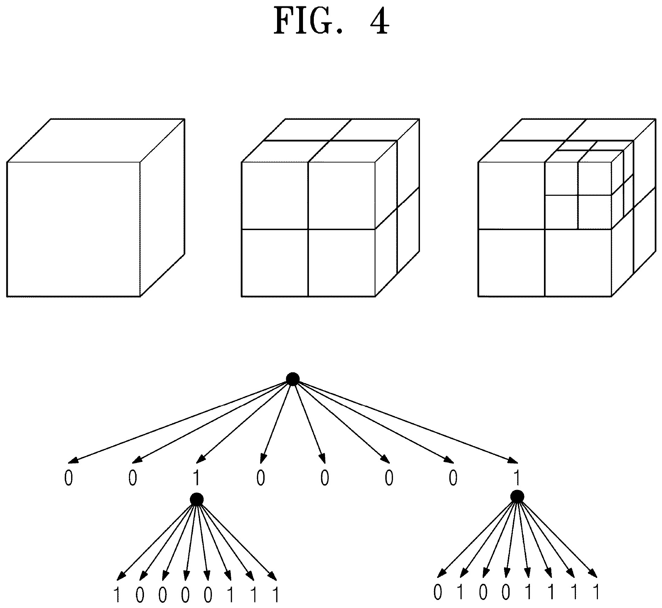

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles $(0, 0, 0)$ and $(2^d, 2^d, 2^d)$. Here, 2d may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$d = Ceil(Log2(Max(x\_n^\wedge int, y\_n^\wedge int, z\_n^\wedge in, n=1,\ldots,N)+1))$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the

subtraction.

$$① \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix}$$

$$② \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix}$$

$$③ \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For 'example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

TABEL 2-1. Triangles formed from vertices ordered 1,...,n

| n | triangles |
|---|---|
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1),(1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

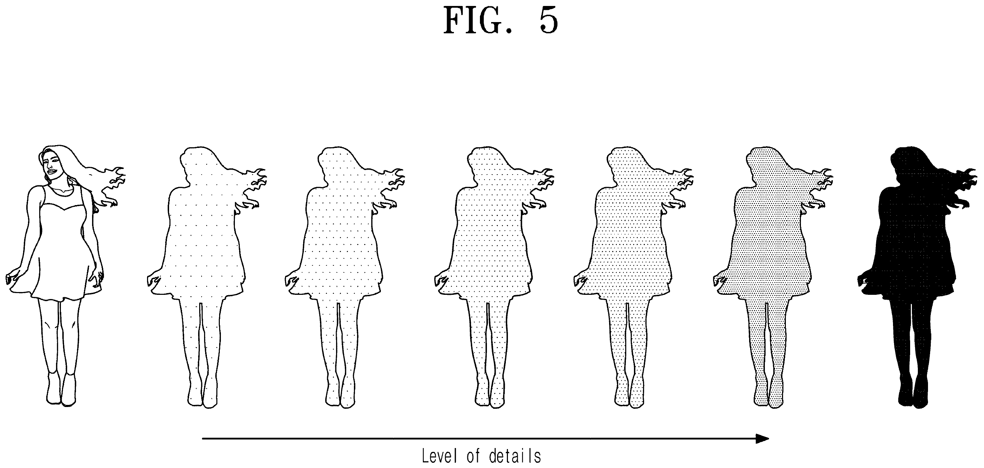

FIG. 5 illustrates an example of point configuration in each LOD according to embodiments.
As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.
The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

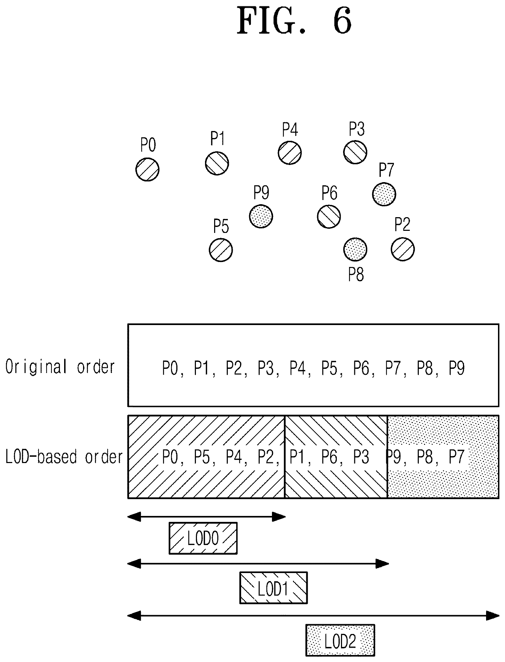

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, or attribute prediction residuals, attribute residuals) obtained by subtracting a predicted attribute (attribute value) from the attribute (attribute value) of each point. The quantization process is configured as shown in the following table.

TABLE Attribute prediction residuals quantization pseudo code

```
int PCCQuantization(int value, int quantStep) {
if( value >=0) {
return floor(value / quantStep + 1.0 / 3.0);
} else {
return -floor(-value / quantStep + 1.0 / 3.0);
}
}
```

TABLE Attribute prediction residuals inverse quantization pseudo code

```
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level l. $g_{l_{x,y,z}}$ may be calculated based on $g_{l+1_{2x,y,z}}$ and $g_{l+1_{2x+1,y,z}}$. The weights for $g_{l_{2x,y,z}}$ and $g_{l_{2x+1,y,z}}$ are w1 = $w_{l_{2x,y,z}}$ and w2 = $w_{l_{2x+1,y,z}}$.

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high-pass coefficients at each step are quantized and subjected to entropy coding (e.g., encoding by the arithmetic encoder 300012). The weights are calculated as $w_{l-1x,y,z} = w_{l_{2x,y,z}} + w_{l_{2x+1,y,z}}$. The root node is created through the $g_{1_{0,0,0}}$ and $g_{1_{0,0,1}}$ as follows.

$$\begin{bmatrix} gDC \\ h_{0_{0,0,0}} \end{bmatrix} = T_{w1000\,w1001} \begin{bmatrix} g_{1\,0,0,0z} \\ g_{1_{0,0,1}} \end{bmatrix}$$

The value of gDC is also quantized and subjected to entropy coding like the high-pass coefficients.

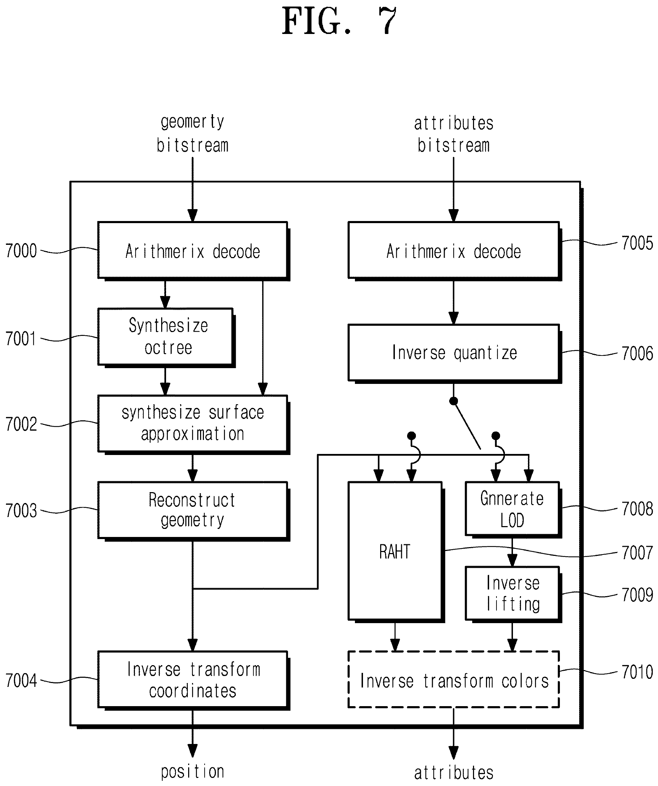

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding described with reference to FIG. 6. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

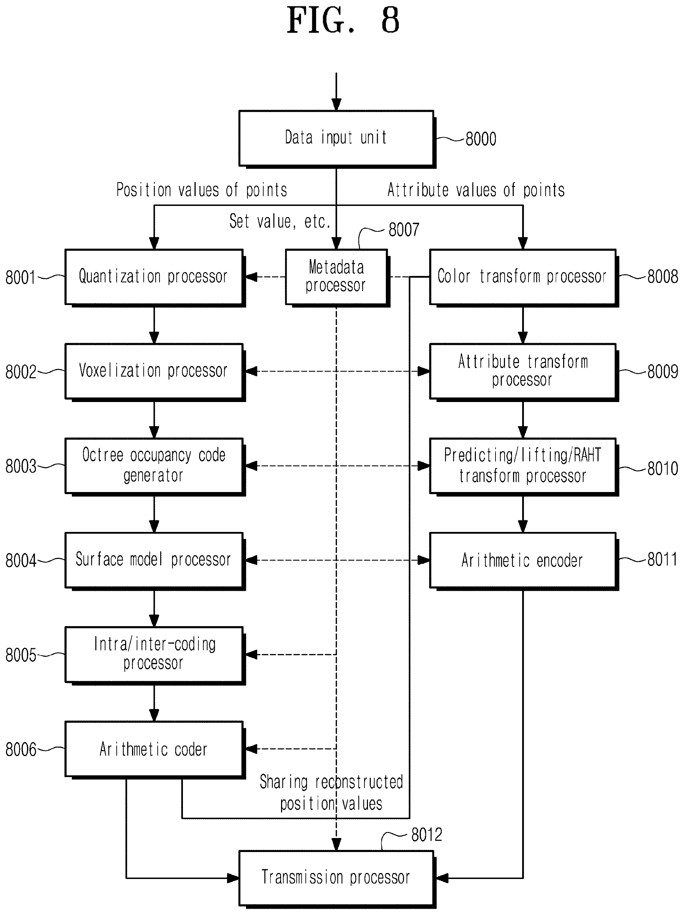

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquirer 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding described with reference to FIG. 7. Details are the same as those described with reference to FIG. 7. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

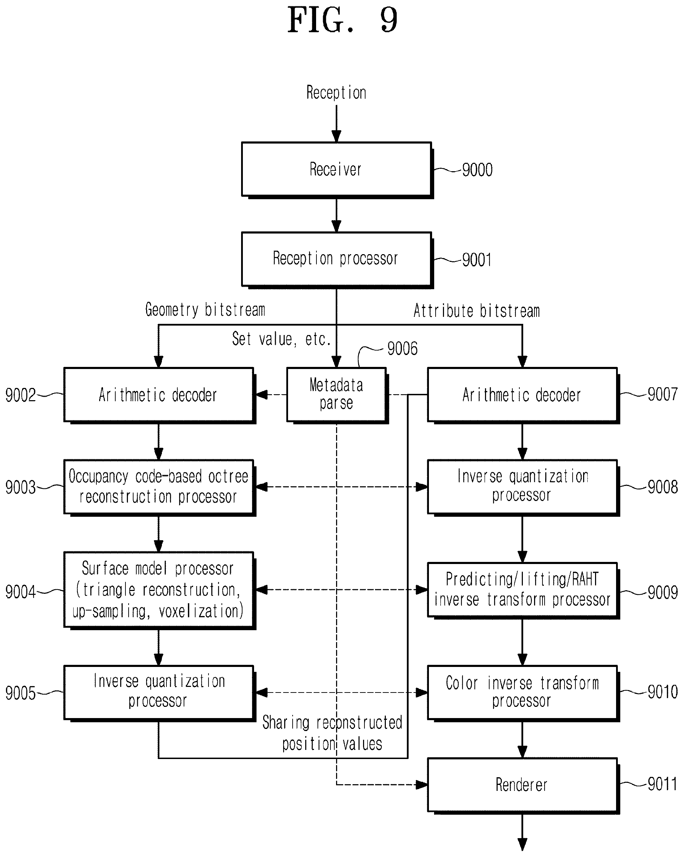

FIG. 9 illustrates a reception device according to embodiments.

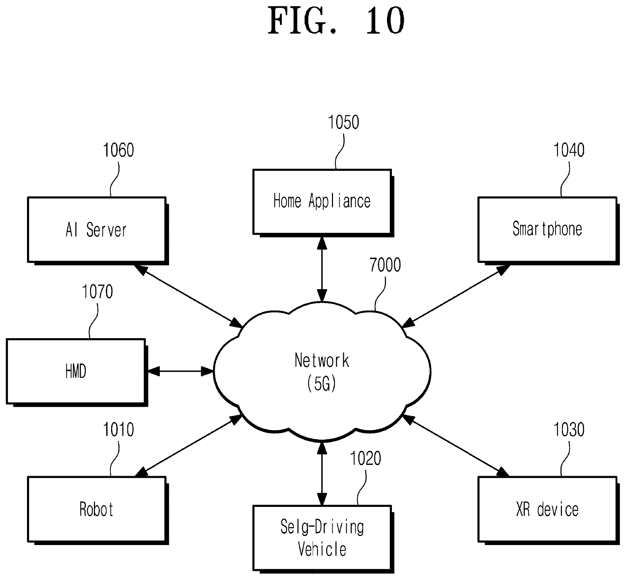

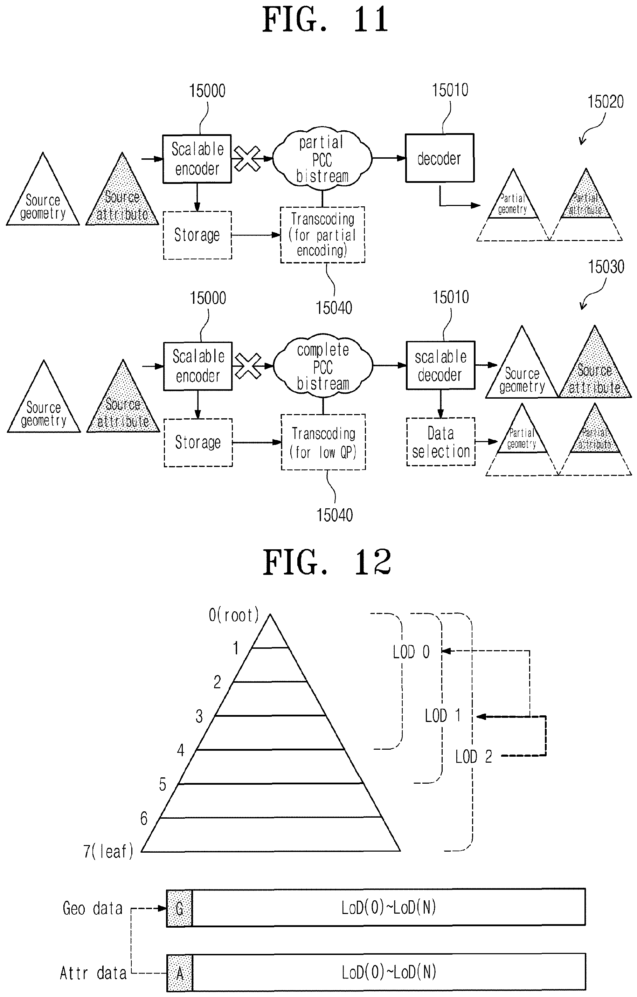

The reception device illustrated in FIG. 9 is an example of the reception device 10004 of FIG. 1 (or the point cloud decoder of FIGS. 10 and 11). The reception device illustrated in FIG. 9 may perform one or more of the operations and methods the same as or similar to those of the point cloud decoder described with reference to FIGS. 1 to 11.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 10, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to FIGS. 1 to 10, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010. The renderer 9011 according to the embodiments may render the point cloud data.

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

<PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

<PCC+XR+Mobile phone>

The XR/PCC device 1030 may be implemented as a mobile phone 1040 by applying PCC technology.

The mobile phone 1040 may decode and display point cloud content based on the PCC technology.

<PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

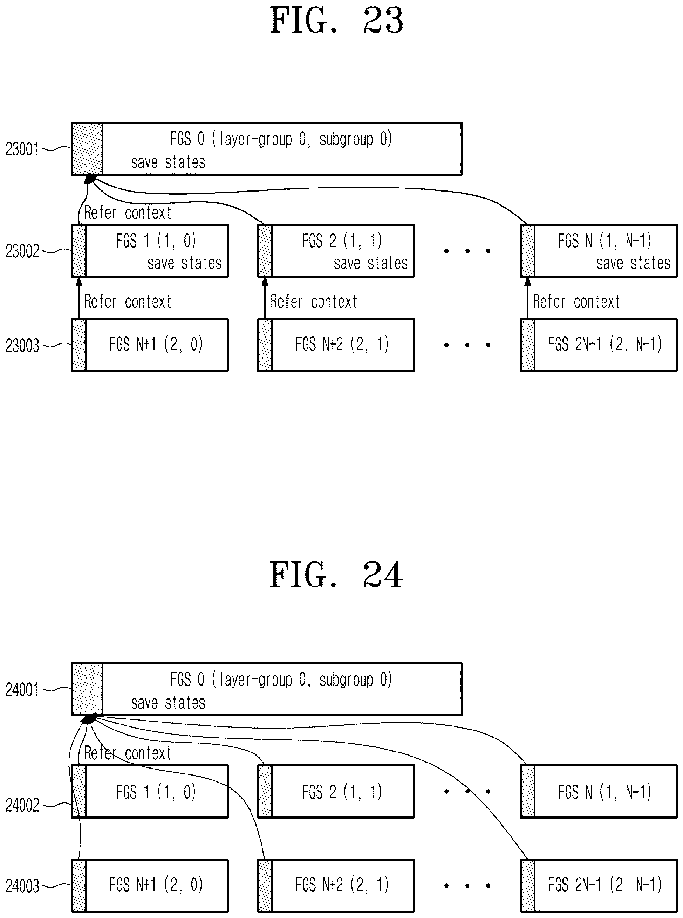

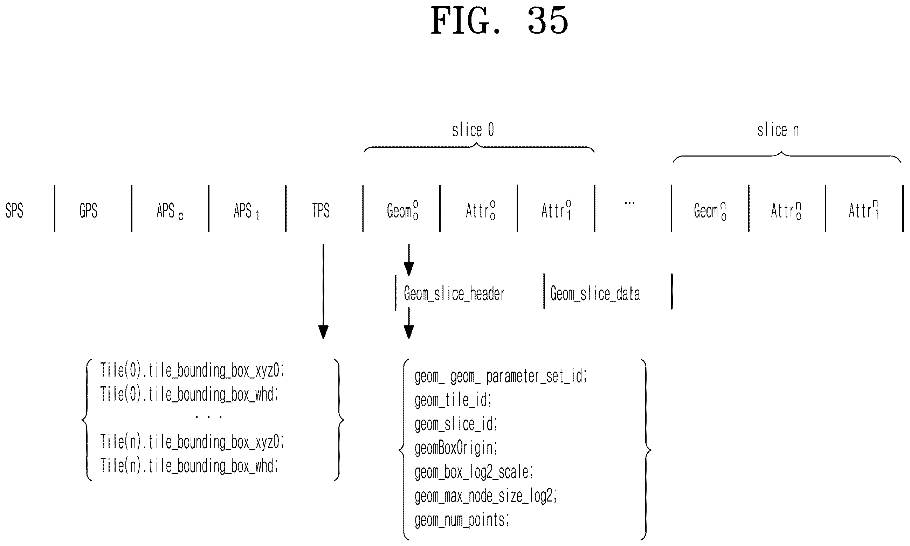

The point cloud data transmission method/device according to embodiments is to be construed as referring to the transmission device 10000, point cloud video encoder 10002, and transmitter 10003 of FIG. 1, the acquisition 20000/encoding 20001/transmission 20002 of FIG. 2, the encoder of FIG. 11, the layer group-based encoding of FIGS. 12 to 22, the context buffer memory control of FIGS. 23 to 34, the bitstream/parameter generation of FIGS. 35 to 39, the encoder of FIG.

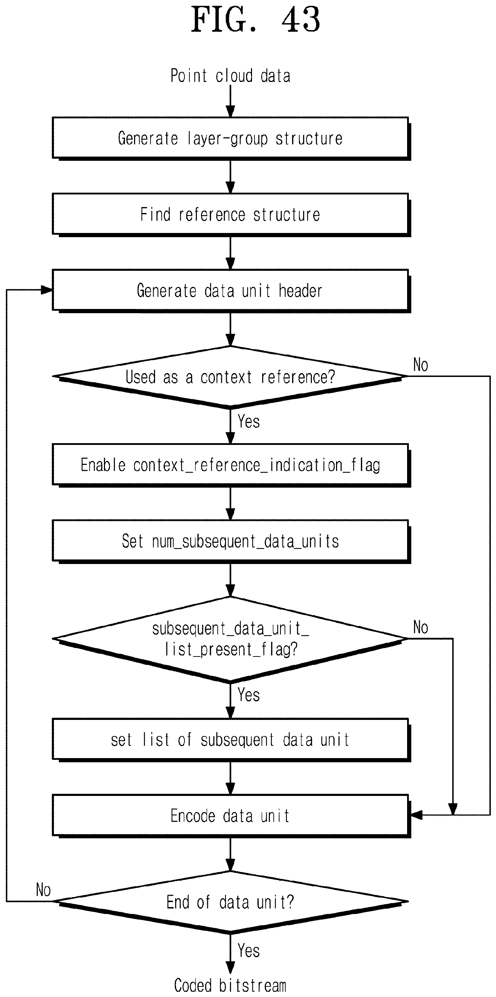

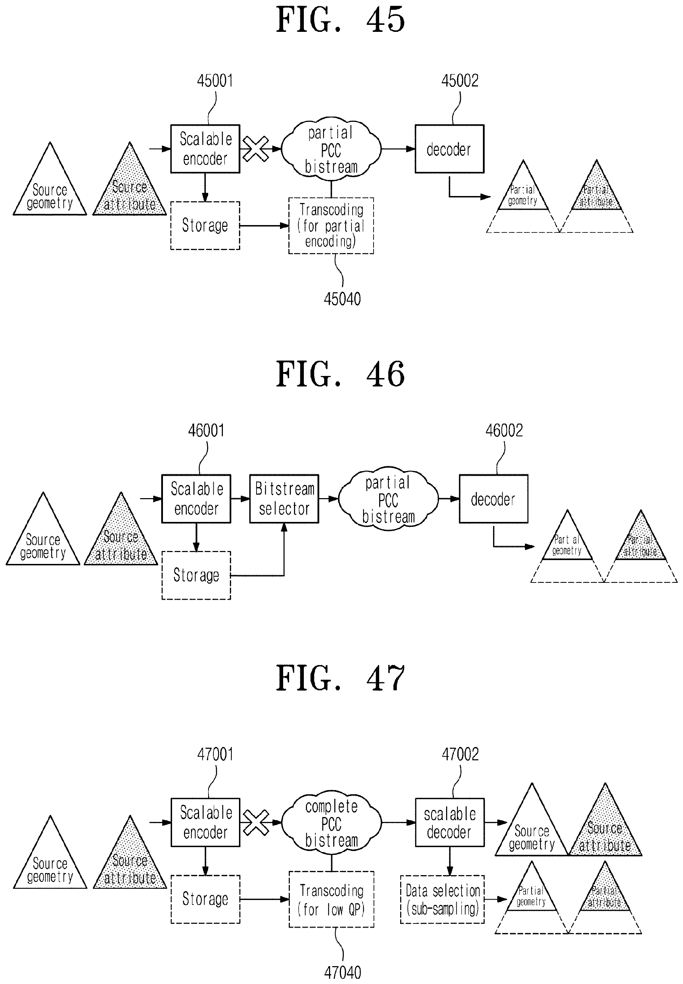

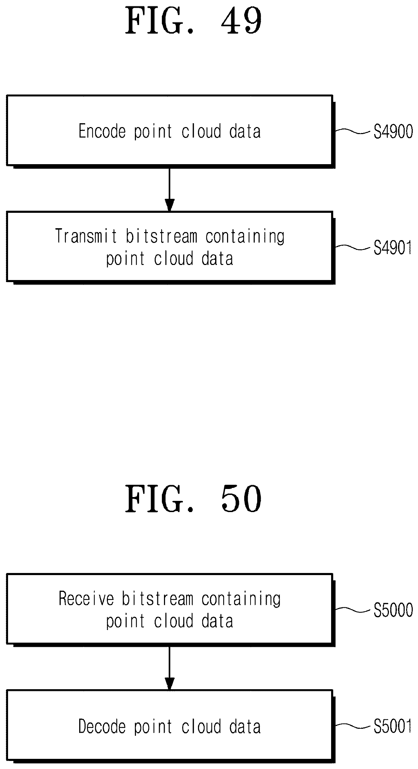

40, the encoding of FIG. 43, the encoder of FIGS. 45 to 48, and the encoding method of FIG. 49.

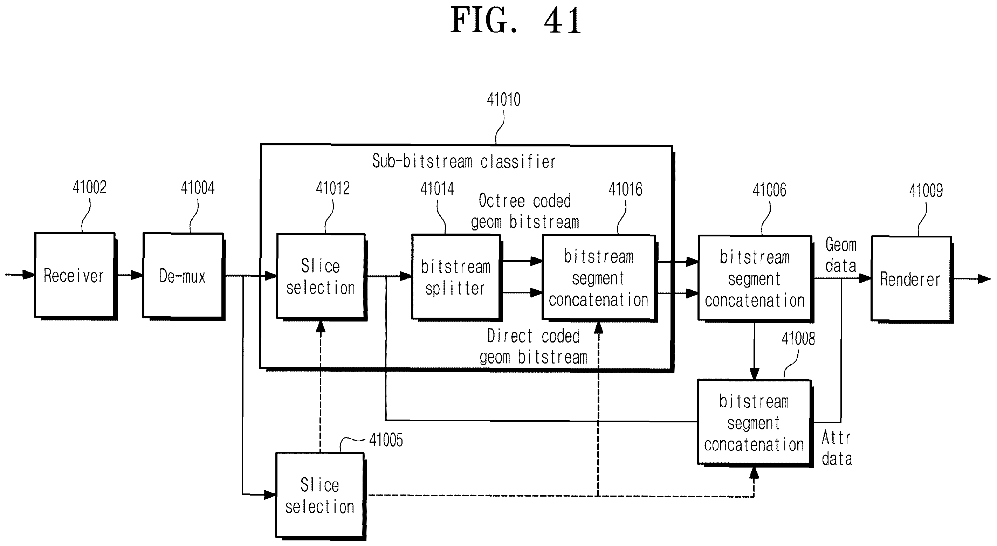

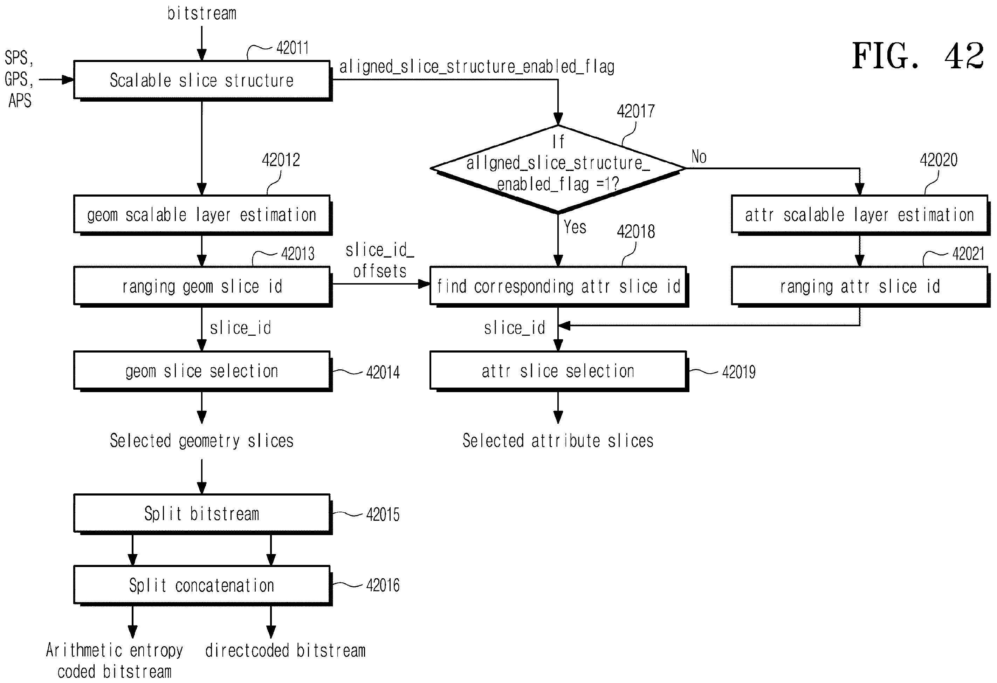

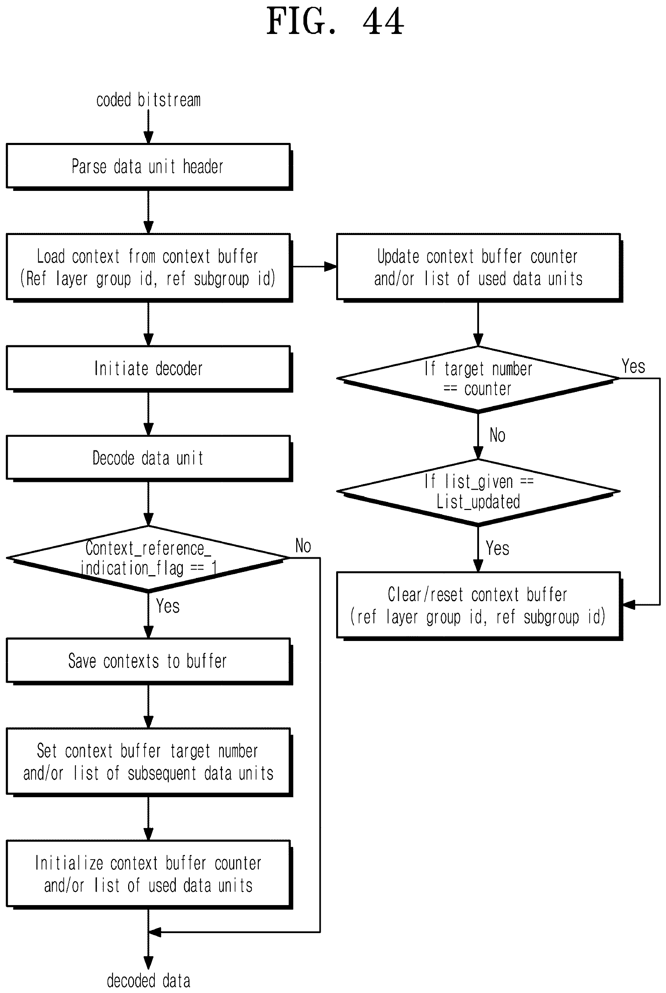

The point cloud data reception method/device according to embodiments is to be construed as referring to the reception device 10004, receiver 10005, and point cloud video decoder 10006 of FIG. 1; the transmission 20002/decoding 20003/rendering 20004 of FIG. 2, the decoder of FIG. 7, the reception device of FIG. 9, the device of FIG. 10, the decoder of FIG. 11, the layer group-based decoding of FIGS. 12 to 22, the context buffer memory control of FIGS. 23 to 34, the bitstream/parameter parsing of FIGS. 35 to 39, the decoder of FIG. 41, the decoding of FIGS. 42 and 44, the decoder of FIGS. 45 to 48, and the decoding method of FIG. 50.

Further, the point cloud data transmission/reception method/device according to the embodiments may be referred to simply as a method/device.

According to embodiments, geometry data, geometry information, and position information constituting point cloud data are to be construed as having the same meaning. Attribute data and attribute information constituting the point cloud data are to be construed as having the same meaning.

Embodiments include an efficient context buffer management method for multiple coding units with context continuation.

Embodiments include a method for efficiently supporting selective decoding of a part of data when the selective decoding is needed due to a receiver performance or a transmission speed in transmitting and receiving point cloud data. Embodiments propose a method of selecting necessary information or removing unnecessary information in a bitstream level by dividing geometry and attribute data, which have been conventionally transferred on a data unit basis, into semantic units such as geometry octree and Level of Detail (LoD).

Embodiments include operations for configuring a data structure composed of a point cloud. Specifically, embodiments describe a packing and signaling method for effectively transferring PCC data configured based on a layer, and include operations for applying the packing and signaling method to a scalable PCC based service. In particular, embodiments include a method of configuring slice segments and transmitting and receiving the same so as to be more suitable for a scalable PCC service when a direct compression mode is used for position compression. In particular, embodiments include a compression structure for efficiently storing and transmitting a large amount of point cloud data distributed wide with a high density of points.

Referring to FIGS. 3 and 7, regarding the point cloud data transmission/reception device (which may be referred to simply as an encoder/decoder) according to embodiments, point cloud data is composed of a position (geometry) (e.g., XYZ coordinates) and attributes (e.g., color, reflectance, intensity, grayscale, opacity, etc.) of each datum. In point cloud compression (PCC), octree-based compression is performed to efficiently compress uneven distribution of data in 3D space, and attribute information is compressed based thereon. The PCC transmission/reception device shown in FIGS. 3 and 7 may process the operation(s) according to embodiments through the respective component devices thereof.

FIG. 11 illustrates a process of encoding, transmitting, and decoding point cloud data according to embodiments.

A point cloud encoder 15000, which is a transmission device carrying out a transmission method according to embodiments, may scalably encode and transmit point cloud data.

A point cloud decoder 15010, which is a reception device carrying out a reception method according to embodiments, may scalably decode the point cloud data.

Source data received by the encoder 15000 may include geometry data and/or attribute data.

The encoder 15000 does not immediately generate a partial PCC bitstream by scalably encoding the point cloud data, but. Instead, when it receives full geometry data and full attribute data, it stores the data in a storage connected to the encoder. Then, the encoder may perform transcoding for partial encoding, and generate and transmit a partial PCC bitstream. The decoder 15010 may receive and decode the partial PCC bitstream to reconstruct partial geometry and/or partial attributes.

Upon receiving the full geometry and full attributes, the encoder 15000 may store the data in the storage connected to the encoder, and transcode the point cloud data with a low quantization parameter (QP) to generate and transmit an entire PCC bitstream. The decoder 15010 may receive and decode the entire PCC bitstream to reconstruct full geometry and/or full attributes. The decoder 15010 may select a partial geometry and/or a partial attribute from the entire PCC bitstream through data selection.

The method/device according to the embodiment divides the position information about data points, which are the point cloud data, and attribute information such as color/brightness/reflectance into geometry information and attribute information so as to be compressed and transmitted. In this case, an octree structure having layers may be configured according to the levels of detail or PCC data may be configured according to levels of detail (LoDs). Then, scalable point cloud data coding and representation may be performed based thereon. In this case, only a part of the point cloud data may be decoded or represented due to the performance of the receiver or the transfer rate.

In this process, the method/device according to the embodiments may remove unnecessary data in advance. In other words, when only a part of the scalable PCC bitstream needs to be transmitted (i.e., only some layers are to be decoded in scalable decoding), it is not allowed to select and transmit only the necessary part. Therefore, 1) the necessary part needs to be re-encoded (15020) after decoding, or 2) the receiver must selectively apply an operation after the whole data is transferred thereto (15030). However, in case 1), delay may occur due to the time for decoding and re-encoding (15020). In case 2), bandwidth efficiency may be degraded due to transmission of unnecessary data. Further, when a fixed bandwidth is used, data quality may need to be lowered for transmission (15030).

In this regard, for octree-based geometry compression, both entropy-based coding and direct coding may be used together. In this case, slice configuration is required to efficiently utilize scalability.

In addition, for large point clouds with a wide distribution and high point density, a delay issue may arise due to the large amount of bitstream that should be processed to access a region of interest.

By employing layer-group slicing, partial decoding, spatial random access, and progressive decoding may be supported. When context continuation is used, efficient memory usage requires context buffer management.

The embodiments may include, methods for efficient context buffer management across multiple slices may include list-based context memory management, reference-count-based context memory management, and data unit coding structure-based context memory management.

FIG. 12 illustrates a layer-based point cloud data configuration according to embodiments.

The transmission method/device according to the embodiments may configure layer-based point cloud data as shown in FIG. 12 to encode and decode the point cloud data.

Layering of point cloud data may have a layer structure from various perspectives such as SNR, spatial resolution, color, temporal frequency, and bit depth depending on the application field, and layers may be formed in a direction in which data density increases based on the octree structure or LoD structure.

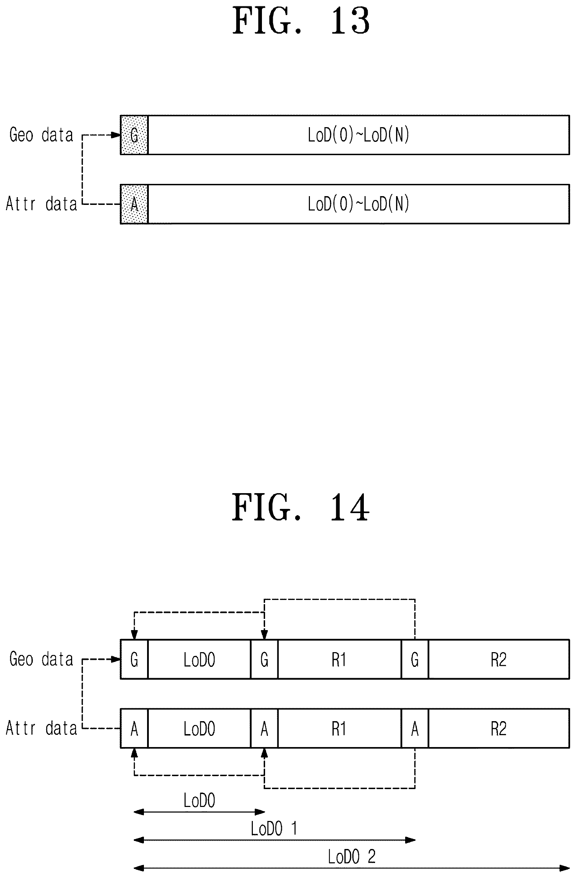

FIG. 13 illustrates a structure of geometry and attribute bitstreams according to embodiments.

The methods/devices according to embodiments may configure, encode, and decode the geometry bitstream and attribute bitstream shown in FIG. 13 based on the layering shown in FIG. 12.

A bitstream acquired through point cloud compression by the transmission device/encoder according to the embodiments may be divided into a geometry data bitstream and an attribute data bitstream according to the type of data so as to be transmitted.

Each bitstream according to the embodiments may be composed of slices. Regardless of layer information or LoD information, the geometry data bitstream and the attribute data bitstream may each be configured as one slice and delivered. In this case, when only a part of the layer or LoD is to be used, operations of 1) decoding the bitstream, 2) selecting only a desired part and removing unnecessary parts, and 3) performing encoding again based on only the necessary information should be performed.

FIG. 14 illustrates bitstream configurations according to embodiments and a bitstream sorting method according to embodiments.

The transmission method/device according to the embodiments may generate a bitstream as shown in FIG. 14, and the reception method/device according to the embodiments may decode point cloud data contained in the bitstream as shown in FIG. 14.

Bitstream configuration according to embodiments

In some embodiments, in order to avoid unnecessary intermediate processes, a bitstream may be divided into layers (or LoDs) so as to be transmitted.

For example, in the case of LoD-based PCC technology, a low LoD is included in a high LoD. Information contained in the current LoD but not in the previous LoD, i.e., information newly added to each LoD, may be referred to as R (Rest). As shown in FIG. 13, initial LoD information and information R newly included in each LoD may be divided into independent units to be transmitted.

The transmission method/device according to the embodiments may encode geometry data and generate a geometry bitstream. The geometry bitstream may be configured for each LOD or layer. The geometry bitstream may include a header (geometry header) for each LOD or layer. The header may include reference information for the next LOD or the next layer. The current LOD (layer) may further include information R (geometry data) not included in the previous LOD (layer).

The reception method/device according to the embodiments may encode attribute data and generate an attribute bitstream. The attribute bitstream may be configured for each LOD or layer, and the attribute bitstream may include a header (attribute header) for each LOD or layer. The header may include reference information for the next LOD or the next layer. The current LOD (layer) may further include information R (attribute data) not included in the previous LOD (layer).

The reception method/device according to the embodiments may receive a bitstream composed of LODs or layers and efficiently decode only necessary data without a complicated intermediate process.

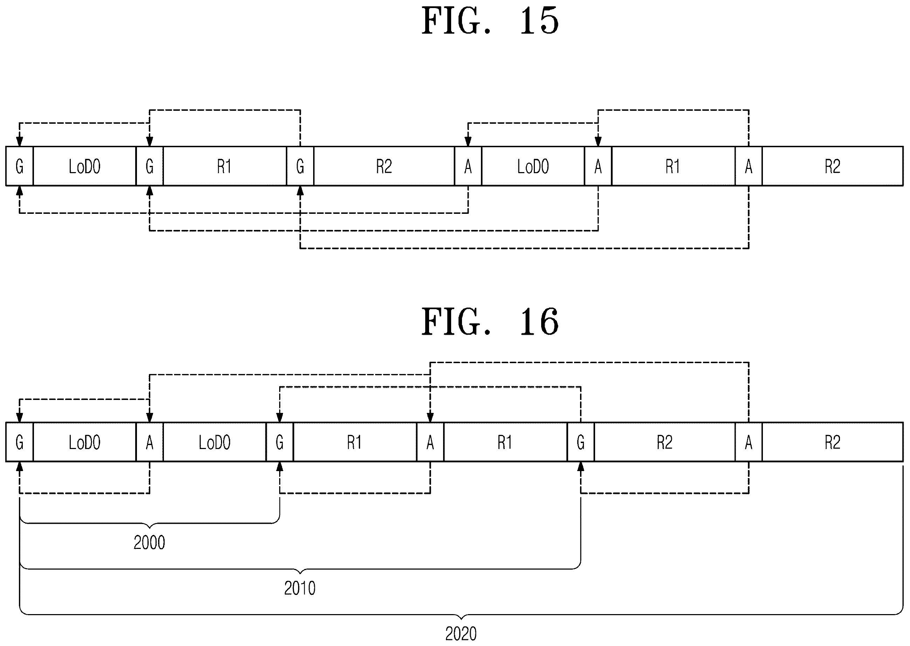

FIG. 15 illustrates a bitstream sorting method according to embodiments.

The method/device according to embodiments may sort the bitstreams of FIG. 14 as shown in FIG. 15.

Bitstream sorting method according to the embodiments.

The transmission method/device according to the embodiments may transmit geometry and attributes in series as shown in FIG. 15 in transmitting a bitstream. In this case, the entire geometry information (geometry data) may be first sent according to the type of data, and then the attribute information (attribute data) may be transmitted. In this case, the geometry information may be quickly reconstructed based on the transmitted bitstream information.

In FIG. 15, for example, layers (LODs) containing geometry data may be first positioned in a bitstream, and layers (LODs) containing attribute data may be positioned behind the geometry layer. Since the attribute data is dependent on the geometry data, the geometry layer may be positioned first. In addition, the positions may be changed according to embodiments. Reference may be made between geometry headers. Reference may also be made between the attribute header and the geometry headers.

FIG. 16 illustrates a bitstream sorting method according to embodiments.

FIG. 16 is an example of bitstream arrangement according to embodiments.

Bitstreams constituting the same layer containing geometry data and attribute data may be grouped and transmitted. In this case, by using a compression technique capable of parallel decoding of geometry and attributes, decoding execution time may be shortened. In this case, information that needs to be processed first (small LoD, where geometry should precede attributes) may be placed first.

A first layer 2000 includes geometry data and attribute data corresponding to the smallest LOD 0 (Layer 0) together with each header. A second layer 2010 includes LOD 0 (Layer 0), and also includes geometry data and attribute data about points for new, more detailed layer 1 (LOD 1) that are not in LOD 0 (Layer 0) as information R1. Similarly, a third layer 2020 may follow the seoncd layer.

The transmission/reception method/device according to the embodiments may efficiently select a layer (or LoD) desired in the application field at a bitstream level in transmitting and receiving a bitstream. In grouping and transmitting geometry according to the bitstream sorting method according to the embodiments (FIG. 15), there may be an empty part in the middle of the bitstream after selecting the bitstream level. In this case, the bitstream may need to be rearranged. When geometry and attributes are grouped and delivered according to the layers (FIG. 16), unnecessary information may be selectively removed according to the application field as follows.

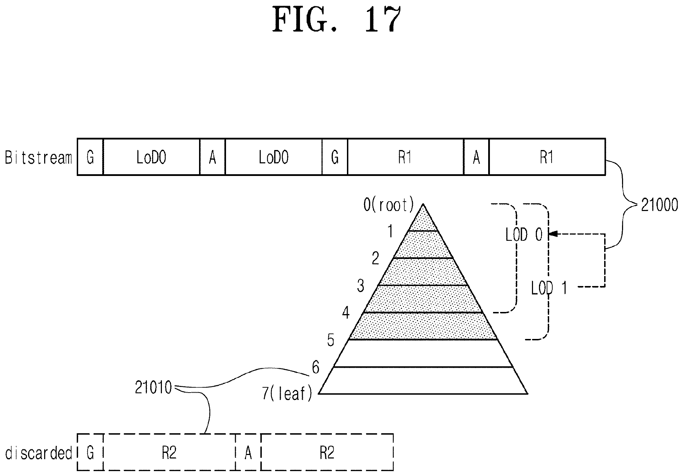

FIG. 17 illustrates a method of selecting geometry data and attribute data according to embodiments.

Bitstream selection according to embodiments

When a bitstream needs to be selected as described above, the method/device according to the embodiments may select data at the bitstream level as shown in FIG. 17: 1) Symmetric selection of geometry and attributes; 2) Asymmetrical selection of geometry and attributes; or 3) A combination of the two methods above.

1) Symmetric selection of geometry and attributes

FIG. 17 illustrates a case where only LoD1 (LOD 0 + R1) 21000 is selected to be transmitted or decoded. In this case, information corresponding to R2 (new part of LOD 2) 21010 corresponding to a higher layer is removed before transmission and decoding.

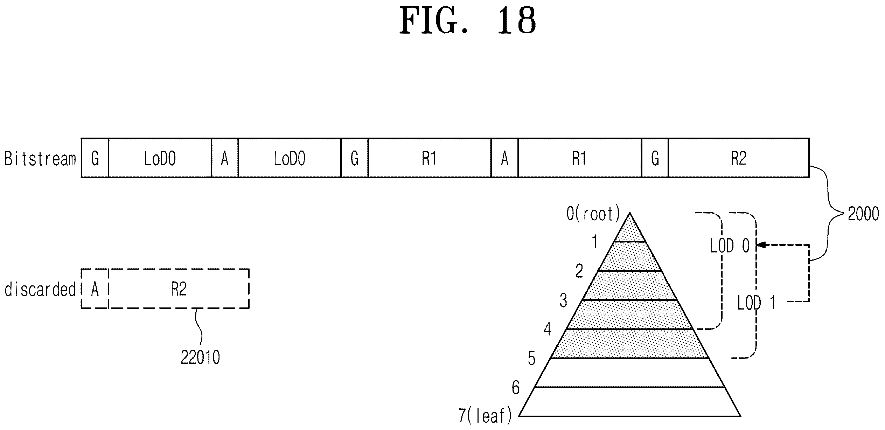

FIG. 18 illustrates a method of selecting a bitstream according to embodiments.

2) Asymmetric selection of geometry and attributes

The method/device according to the embodiments may asymmetrically transmit geometry and attributes. Only the attributes of the higher layer (attribute R2 22000) may be removed and all geometries (level 0 (root level) to level 7 (leaf level) in the triangle octree structure) may be selected to be transmitted/decoded (22010).

Referring to FIG. 12, when point cloud data is represented in an octree structure and hierarchically divided into LODs (or layers), scalable encoding/decoding (scalability) may be supported.

The scalability function according to the embodiments may include slice level scalability and/or octree level scalability.

The LoD (level of detail) according to the embodiments may be used as a unit for representing a set of one or more octree layers. In addition, it may mean a bundle of octree layers to be configured on a slice basis.

In attribute encoding/decoding, the LOD according to the embodiments may be extended and used as a unit for dividing data in detail in a broader sense.

That is, spatial scalability by an actual octree layer (or scalable attribute layer) may be provided for each octree layer. However, when scalability is configured in the slice level before bitstream parsing, selection may be made in LoDs according to embodiments.

In the octree structure, LOD0 may correspond to the root level to level 4, LOD1 may correspond to the root level to level 5, and LOD2 may correspond to the root level to level 7, which is the leaf level.

That is, as shown in FIG. 12, when scalability is utilized in slices as in scalable transmission, the provided scalable step may correspond to three steps of LoD0, LoD1, and LoD2, and the scalable step that may be provided by the octree structure in the decoding operation may correspond to eight steps from the root to the leaf.

According to embodiments, for example, in FIG. 12, when LoD0 to LoD2 are composed of corresponding slices, the transcoder (15040 in FIG. 11) of the transmitter or the receiver may select 1) LoD0 only, select 2) LoD0 and LoD1, or select 3) LoD0, LoD1, and LoD2 for scalable processing.

Example 1: When only LoD0 is selected, the maximum octree level may be 4, and one scalable layer may be selected from among octree layers 0 to 4 in the decoding process. In this case, the receiver may consider a node size obtainable through the maximum octree depth as a leaf node, and may transmit the node size as signaling information.

Example 2: When LoD0 and LoD1 are selected, layer 5 may be added. Thus, the maximum octree level may be 5, and one scalable layer may be selected from among octree layers 0 to 5 in the decoding process. In this case, the receiver may consider a node size obtainable through the maximum octree depth as a leaf node, and may transmit the node size as signaling information.

According to embodiments, an octree depth, an octree layer, and an octree level may be units in which data is divided in detail.

Example 3: When LoD0, LoD1, and LoD2 are selected, layers 6 and 7 may be added. Thus, the maximum octree level may be 7, and one scalable layer may be selected from among octree layers 0 to 7 in the decoding process. In this case, the receiver may consider a node size obtainable through the maximum octree depth as a leaf node, and may transmit the node size as signaling information.

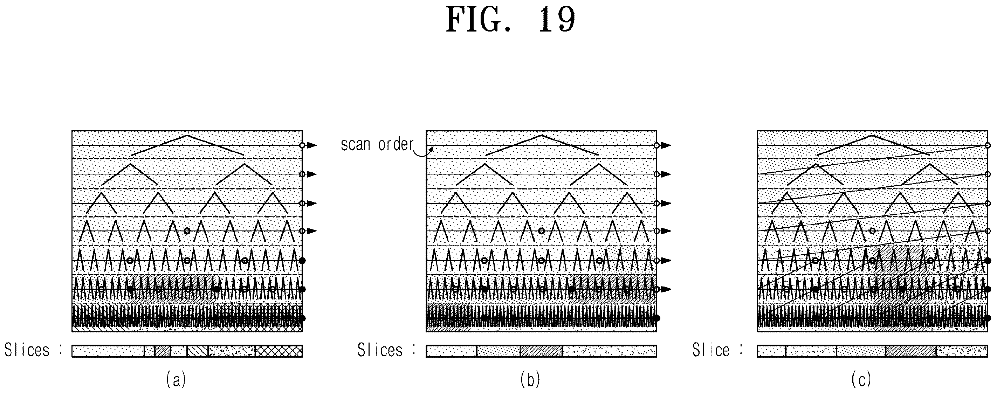

FIG. 19 illustrates a method of configuring a slice including point cloud data according to embodiments.

Slice configuration according to embodiments

The transmission method/device/encoder according to the embodiments may configure a G-PCC bitstream by the bitstream in a slice structure. A data unit for detailed data representation may be the slice.

For example, one or more octree layers may be matched to one slice.

The transmission method/device according to the embodiments, for example, the encoder, may configure a slice-based bitstream by scanning a node (point) included in an octree in the direction of scan order.

FIG. 19-(a): Some nodes in an octree layer may be included in one slice.

An octree layer, for example, from level 0 to level 4, may constitute one slice.

Some data of an octree layer, for example, level 5, may constitute each slice.

Some data of an octree layer, for example, level 6, may constitute each slice.

FIGS. 19-(b) and 19-(c): When multiple octree layers are matched to one slice, only some nodes of each layer may be included. When multiple slices constitute one geometry/attribute frame, information necessary to configure a layer may be delivered for the receiver. The information may include information about layers included in each slice and information about nodes included in each layer.

FIG. 19-(b): Octree layers, for example, from level 0 to level 3, and part of the data of level 4, may constitute one slice.

Octree layers, for example, part of the data of level 4 data and part of the data of level 5, may constitute one slice.

Octree layers, for example, part of the data of level 5 and part of the data of level 6, may constitute one slice.

Octree layers, for example, part of the data of level 6, may constitute one slice.

FIG. 19-(c): Octree layers, for example, data of level 0 to level 4, may constitute one slice.

Part of the data from each of octree layer level 5, level 6, and level 7 may constitute one slice.

The encoder and the device corresponding to the encoder according to the embodiments may encode the point cloud data, and may generate and transmit a bitstream containing the encoded data and parameter information related to the point cloud data.

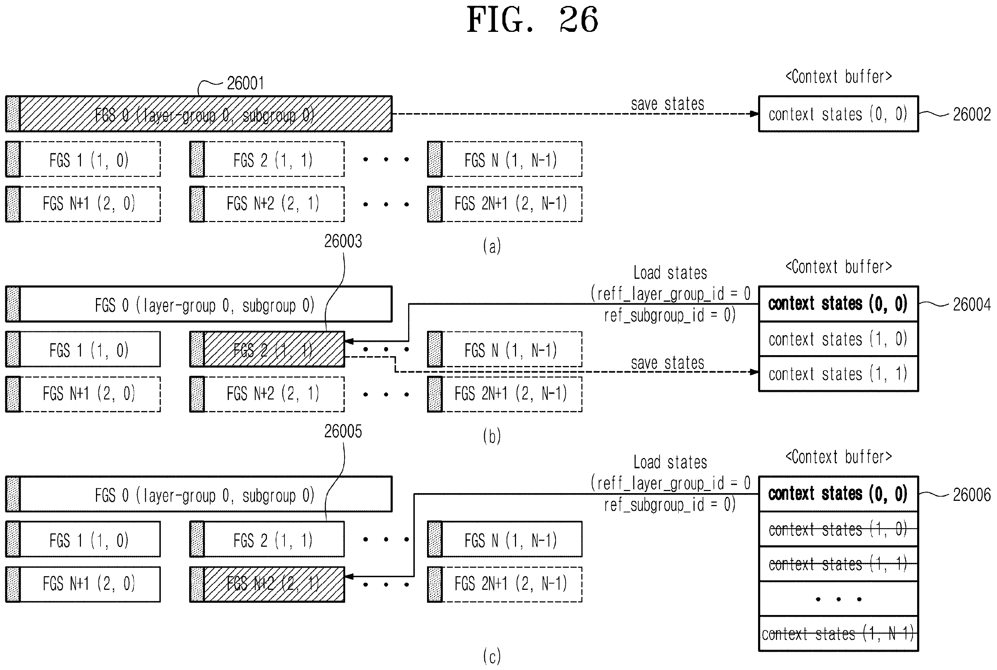

Further, regarding generating the bitstream, the bitstream may be generated based on the bitstream structure according to embodiments (see, for example, FIG. 26). Accordingly, the reception device, the decoder, and a corresponding device according to the embodiments may receive and parse a bitstream configured to be suitable for selective partial data decoding, and partially decode and efficiently provide the point cloud data (see FIG. 11).

Scalable transmission according to embodiments

The point cloud data transmission method/device according to the embodiments may scalably transmit a bitstream containing point cloud data, and the point cloud data reception method/device according to the embodiments may scalably receive and decode the bitstream.

When the bitstream according to the embodiments shown in FIG. 19 is used for scalable transmission, information needed to select a slice required by the receiver may be transmitted to the receiver. Scalable transmission may mean transmitting or decoding only a part of a bitstream, rather than decoding the entire bitstream, and the result thereof may be low resolution point cloud data.

When scalable transmission is applied to the octree-based geometry bitstream, point cloud data may need to be configured with information ranging only up to a specific octree layer for the bitstream of each octree layer (FIG. 12) from a root node to a leaf node.

To this end, the target octree layer should have no dependency on information about the lower octree layer. This may be a constraint applied to geometry coding and attribute coding in common.

Additionally, during scalable transmission, a scalable structure for selection of scalable layers should be delivered to the transmitter/receiver. Considering the octree structure according to embodiments, all octree layers may support scalable transmission, or scalable transmission may be limited to only certain octree layers. When a slice includes part of the octree layers, it may be indicated which scalable layer the slice belongs to, such that it may be determined whether the slice is necessary/unnecessary at the bitstream level. For example, in FIG. 19-(a), in the yellow-hilighted part starting from the root node, scalable transmission may not be supported, and one scalable layer may be configured, while lower octree layers may be configured to match one-to-one with scalable layers. Generally, scalability may be supported for a part corresponding to the leaf node. When multiple octree layers are included in a slice as shown in FIG. 19-(c), one scalable layer may be defined to be configured for the layers.

In this case, scalable transmission and scalable decoding to be ued may be distinguished by the purpose thereof. Scalable transmission may be used to select information up to a specific layer without passing through a decoder at the transmitting/receiving side. Scalable decoding may be used to select a specific layer during coding. That is, scalable transmission may allow necessary information in a compressed state (at the bitstream level) to be selected without passing through a decoder, enabling transmission or determination at the receiver. In contrast, scalable decoding may support encoding/decoding only the necessary portion during the encoding/decoding process, and may thus be used for scalable representation.

In this case, the layer configuration for scalable transmission and the layer configuration for scalable decoding may differ. For example, three lower octree layers including the leaf node may constitute one layer from the perspective of scalable transmission. However, from the perspective of scalable decoding, including all layer information may enable scalable decoding for each of the leaf node layer, leaf node layer-1, and leaf node layer-2.

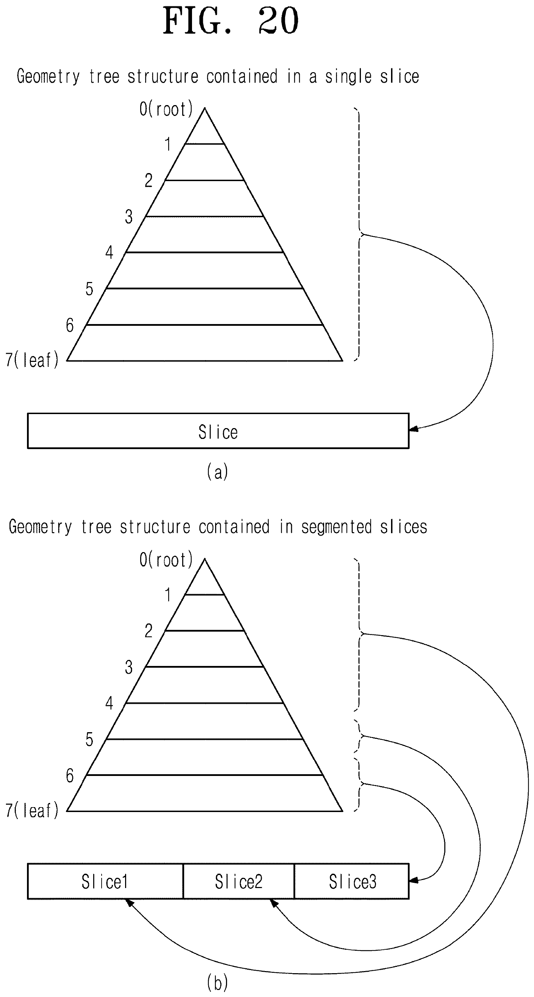

FIG. 20 illustrates a geometry tree structure based on a single slice and segmented slices according to embodiments.

Methods/devices according to embodiments may configure slices for delivering point cloud data as shown in FIG. 20.

FIG. 20 illustrates geometry tree structures included in different slice structures. According to G-PCC technology, the entire coded bitstream may be contained in a single slice. Furthermore, for multiple slices, each slice may contain a sub-bitstream. The order of the slices may be the same as the order of the sub-bitstreams. The bitstream may be accumulated in a breadth-first order of the geometry tree, and each slice may be matched to a group of tree layers (FIG. 20). Segmented slices may inherit the layering structure of the G-PCC bitstream.

Just as upper layers of a geometry tree do not affect lower layers, following slices may not affect preceding slices.

Segmented slices according to embodiments are efficient in terms of error robustness, effective transmission, and supporting region of interest.

1) Error resilience

Compared to the single slice structure, segmented slices may be more robust to errors. If a slice contains the whole bitstream of a frame, data loss may affect the whole frame data. On the other hand, when the bitstream is segmented into multiple slices, some of the slices that are not affected by the loss are decodable even when some slices are lost.

2) Scalable transmission

A case where multiple decoders with different capabilities are supported may be considered. When coded data is in a single slice, the LOD of the coded point cloud may be determined before encoding. Therefore, multiple pre-encoded bitstreams that contain different resolutions of point cloud data may be delivered independently, which may be inefficient in terms of the large bandwidth or storage space.

When a PCC bitstream is generated and contained in segmented slices, a single bitstream may support different levels of decoders. On the decoder side, the receiver may select targeted layers and deliver the partially selected bitstream to the decoder. Similarly, a apartial PCC bitstream may be generated efficiently on the transmitter side by using a single PCC bitstream without partitioning the whole bitstream.

3) Region based spatial scalability

According to the G-PCC requirement, region-based spatial scalability may be defined as follows. The compressed bitstream may be structured with more than one layers such that specific regions of interest may have a higher density with additional layers, wherein the layers may be predicted from lower layers.

To support the requirement, it is necessary to support region-wise different detailed representation. For example, in VR/AR applic it is desirable to represent the nearer objects with higher precision while the far objects may be represented with lower precision. Alternatively, the decoder may increase the resolution of a region of interest whenever there is a request. This may be realized using the scalable structure of G-PCC, such as the geometry octree and scalable attribute coding scheme. Based on the current slice structure which contains the whole geometry or attributes, decoders should access the whole bitstream, which may cause inefficiencies in bandwidth, memory, and decoder. On the other hand, when the bitstream is segmented into multiple slices and each slice contains sub-bitstreams according to the scalable layers, decoders according to embodiments may select necessary slices before parsing the bitstream in an effective way.

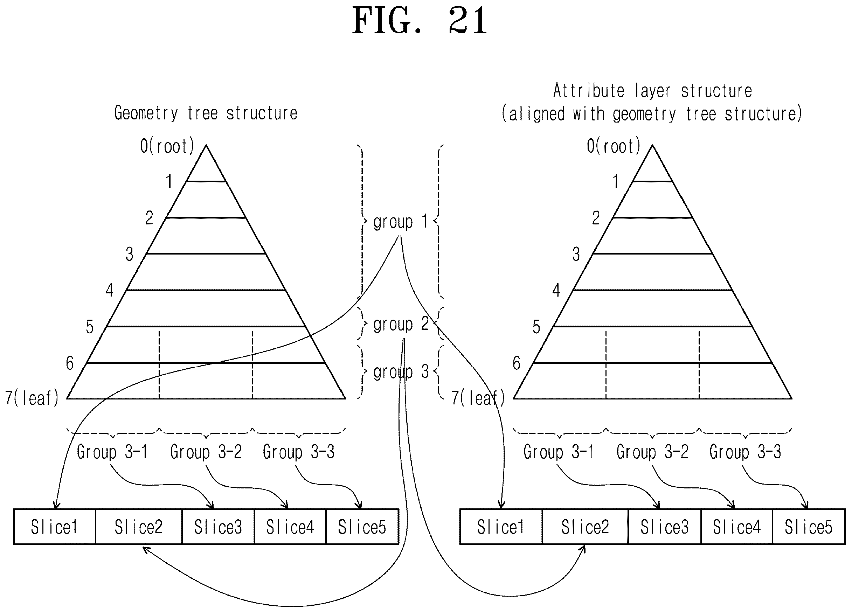

FIG. 21 illustrates a layer group structure of a geometry coding tree and an aligned layer group structure of an attribute coding tree according to embodiments.

FIG. 21 illustrates a layer group structure of a geometry coding tree and an aligned layer group structure of an attribute coding tree according to embodiments.

Methods/devices according to embodiments may generate slice layer groups using the layered structure or tree structure of point cloud data as shown in FIG. 21.

The methods/devices according to the embodiments may apply segmentation to the geometry and attribute bitstreams contained in different slices. Additionally, in terms of the tree depth, the coding tree structure of geometry and attribute coding and each slice contained in partial tree information may be used.

Referring to FIG. 21-(a), an example of a geometry tree structure and proposed slice segments is shown.

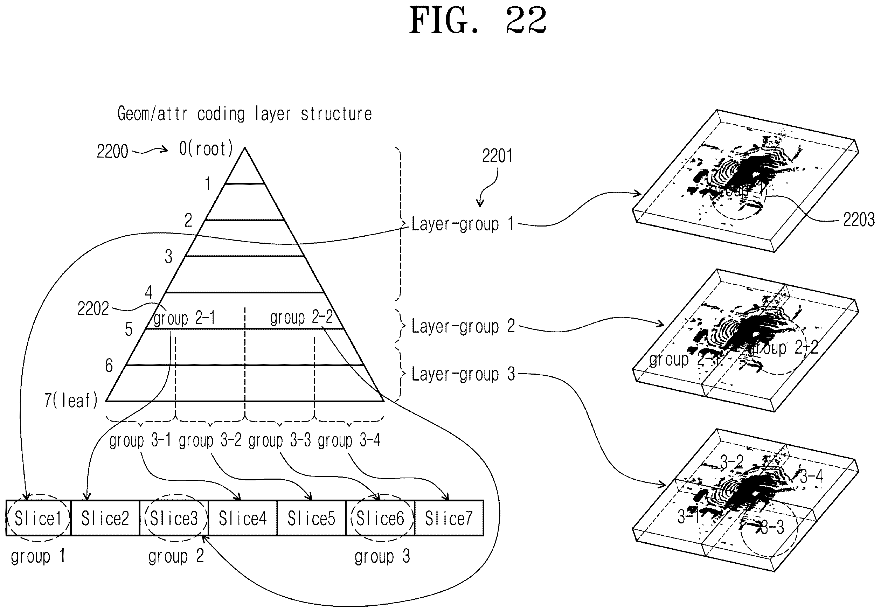

For example, there are 8 layers (layer 0 to layer 7) in the octree, and 5 slices may be used to contain the sub-bitstreams of one or more layers. A group represents the group of geometry tree layers. For example, group 1 consists of layers 0 to 4. Group 2 contains layer 5, and group 3 contains layers 6 and 7. Also, a group may be divided into three sub-groups, where parent-child pairs may be in in each sub-group. Groups 3-1 to group 3-3 are sub-groups of group 3. When scalable attribute coding is used, the tree structure may be identical to the geometry tree structure. The same octree-slice mapping may be used to create attribute slice segments (FIG. 22-(b)).

Layer group: Refers to a bundle of layer structure units that occur in G-PCC coding, such as octree layers or LoD layers.

Sub-group: A sub-group may be represented as a set of neighbor nodes based on position information for one layer group. Alternatively, a bundle may be configured based on the lowest layer (which may be a layer closest to the root, and may be layer 6 in the case of group 3 in FIG. 22). A subgroup may be configured as a bundle of nodes neighboring each other according to Morton code order, as a bundle of distance-based neighbor nodes, or as a bundle of nodes neighboring each other according to coding order. Additionally, nodes in a parent-child relationship may be specified to be present in the same sub-group.

When When a sub-group is defined, a boundary occurs in the middle of a layer, and information such as sps_entropy_continuation_enabled_flag or gsh_entropy_continuation_flag may be signaled to indicate whether continuity is maintained at the boundary. Also, ref_slice_id may be signaled. Thereby, continuity with the previous slice may be maintained.

The tree structure of geometry according to embodiments may be an octree structure, and the attribute layer structure or attribute tree structure according to embodiments may include a Level of Detail (LoD) structure. That is, the tree structure for point cloud data may include layers corresponding to depths or levels, and the layers may be grouped.

The methods/devices according to embodiments (e.g., the octree analyzer 40002 or LOD generator 40009 in FIG. 4, or the octree synthesizer 11001 or LOD generator 11008 in FIG. 11) may generate the octree structure of geometry or the LOD tree structure of attributes. In addition, as shown in FIGS. 21 and 22, point cloud data may be grouped based on layers in the tree structure.

Referring to FIG. 21, multiple layers are grouped to form first to third groups. A group may be further divided into sub-groups. FIG. 21 shows that the third group is divided into three sub-groups.

The methods/devices according to embodiments may generate geometry-based slices and attribute-based slice layers.

Attribute coding layers may have a structure different from the geometry coding tree.

To efficiently use the G-PCC layering structure, segmentation of slices paired with the geometry and attribute layering structures may be provided.

For geometry slice segments, each slice segment may contain coded data from a layer group. Here, the layer group is defined as a group of consecutive tree layers, and the start and end depths of the tree layers may be specific numbers within the tree depth, with the start being less than the end.

For attribute slice segments, each slice segment may contain coded data from a layer group. Here, the layers may correspond to tree depths or LoDs according to the attribute coding scheme.

The order of coded data within slice segments may be the same as the order in a single slice.

Parameter sets contained in the bitstream may provide the following information.

FIG. 22 illustrates a layer group and sub-group structure according to embodiments.

Point cloud data and bitstreams based on layer structures may be represented as bounding boxes as shown in FIG. 22.

FIG. 22 shows sub-group structures and bounding boxes corresponding to sub-groups. Layer groups 2 and 3 are divided into 2 sub-groups (group2-1, group2-2) and 4 sub-groups (group3-1, group3-2, group3-3, group3-4) and contained in different slices. Given segments of layer groups and sub-groups with bounding box information, 1) the bounding box of each segment (slice) may be compared with the ROI, and 2) slices whose sub-group bounding boxes correlate with the ROI may be selected, and spatial access may be performed. Then 3) the selected slices are decoded. Considering ROI in region 3-3, slices 1, 3, and 6 are selected as based on the bounding boxes of layer group 1, sub-group 2-2, and sub-group 3-3 to cover the ROI. For efficient spatial access, it is assumed that there is no dependency between the sub-groups of the same layer group. In live streaming or low-latency use cases, selection and decoding may be performed upon receiving each slice segment to improve temporal efficiency.

The method/device according to the embodiments may represent data as layers (depths/levels) in a layer tree 22000 during geometry and/or attribute encoding. Point cloud data corresponding to layers (depths/levels) may be grouped into a layer group (or group) 22001. Each layer group may be further divided (segmented) into subgroups 22002. A bitstream may be generated by configuring each subgroup as a slice. The reception device according to the embodiments may receive the bitstream, select a specific slice, decode a subgroup contained in the slice, and decode a bounding box corresponding to the subgroup. For example, when slice 1 is selected, a bounding box 22003 corresponding to group 1 may be decoded. Group 1 may be data corresponding to the largest region. When the user wants to additionally view a detailed region for group 1, the method/device according to the embodiments may select slice 3 and/or slice 6, and may partially and hierarchically access the bounding box (point cloud data) of group 2-2 and/or group 3-3 for the detailed regions included in the region of group 1.

According to embodiments, one slice may be selected based on sub-group bounding box information. For example, a slice that matches the ROI is determined and selected based on the subgroup bounding box information.

By dividing a compressed bitstream into slices for delivery with the proposed method for the full coding layer, receivers with different performances may be supported. In the case of selective decoding of slices based on ROI or receiver performance, selection may be performed either directly by the receiver or by the transcoder. In the case of selection by the transcoder, there is no information about the full decoding (e.g., the entire coding layer depth, the total number of layer groups, the total number of sub-groups, etc.). The receiver may need this information during the decoding. In this case, this information may be provided directly or num_skipped_layer_groups and num_skipped_layers may be delivered as information for inferring the aforementioned information.

FIG. 23 illustrates an example of context reference between layer groups according to embodiments.

Referring to FIG. 23, a fine-granularity slice (FGS) may represent a subgroup or a slice. The subgroup or slice may be configured by grouping point cloud data according to embodiments.

In FIG. 23, FGS 1(1,0) represents subgroup 0 of layer group 1, FGS 2(1,1) represents subgroup 1 of layer group 1, FGS N+1(2,0) represents subgroup 0 of layer group 2, and FGS N+2(2,1) represents subgroup 1 of layer group 2.

In FIG. 23, "Save states" indicates encoding or decoding the subgroup and storing context information, while "Refer context" indicates referencing the stored context information to encode or decode the subgroup.

Thus, in FIG. 23, FGS 1 may reference the context information of FGS 0 23001, and FGS N+1 23003 may reference the context information of FGS 1 23002. The subgroups (or slices) belonging to layer group 2 may reference the context of subgroups (or slices) belonging to layer group 1, and the subgroups belonging to layer group 1 may be the parent subgroups of the subgroups belonging to layer group 2.


Context inheritance


FIG. 23 illustrates the context reference structure of layer group slicing according to embodiments. Referring to the figure, each FGS may correspond to a subgroup according to embodiments, and the subgroups in the same row are considered to be in the same layer group. Subgroups may correspond to slices. The arrow from a slice to the other represents a context referencing relationship between two slices. The context reference of a current slice may be one of the slices decoded prior to the current slice.

Considering an embodiment of spatial random access, referencing the parental subgroup may be a good choice to guarantee independency between subgroups. However, the number of the context buffers may increase when the number of layer-groups and subgroups increases. Considering the number of context buffer as the number of referenced slices, the number of context buffers may be the sum of all subgroups except for those in the first and the last layer-groups.

This may be formulated as follows, where N denotes a number:

$$N\_(\text{context buffer})=1+N\_\text{subgroup}\times(N\_(\text{layer-group})-2)$$

FIG. 24 illustrates an example of context reference between groups according to embodiments.

In FIG. 24, FGS 1 24002 to FGS N, FGS N+1 24003 to FGS 2N+1 reference the context information of FGS 0 24001. That is, all subgroups (or slices) except FGS 0 24001 reference FGS 0 24001.

One method to reduce the size of the context buffer according to embodiments may be to reduce the number of subgroups referenced by following slices. An extreme case of this method may be referencing the root slice as shown in FIG. 24. Based on the number of context buffer discussed above, this approach results in a single context buffer as the number of referenced subgroup slices are zero.

N_(context buffer)=1

That is, all slices reference the first slice. Compared to FIG. 24, the number of saved context states is reduced to one, and all dependent slices reference the first slice.

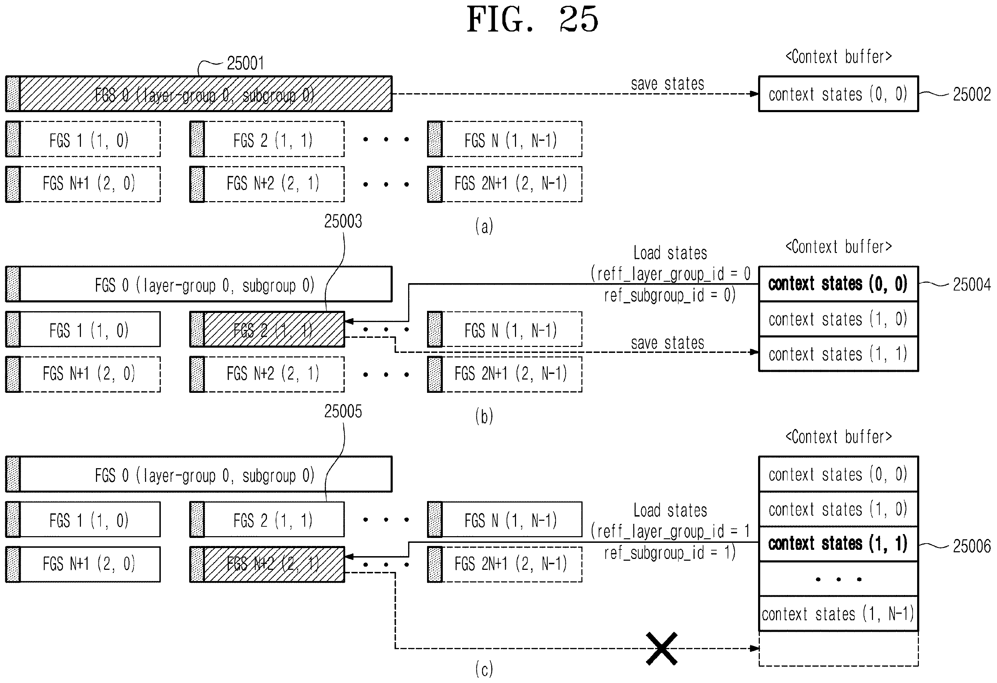

FIG. 25 illustrates an example of context buffer management according to embodiments.

Referring to FIG. 25-(a), the transmission/reception device according to embodiments processes FGS 0(0,0) 25001 and stores the context information 25002 related to the group (FGS 0) in the context buffer.

Referring to FIG. 25-(b), the transmission/reception device according to embodiments may load the context information (states) 25004 of FGS 0 from the context buffer to process (encode or decode) FGS 2(1,1) 25003. After processing FGS 2(1,1), it may save the context states of FGS 2(1,1) in the context buffer. The loading of the context information may be performed with reference to the parameters reference ref_layer_group_id and ref_subgroup_id.

Referring to FIG. 25-(c), to process FGS N+2(2,1) 25005, the transmission/reception device according to embodiments may load the context information (context states(1,1)) of FGS 2(1,1). Since FGS N+2(2,1) belongs to the last layer group, the context information thereof is not stored in the context buffer.

Referring to FIG. 25, changes in the context buffer in the parent subgroup referencing is illustrated. When the bitstream of a slice is decoded, the context state is saved in the context buffer as shown in FIG. 25-(a). When context inheritance is used, the context states of the following slices are initialized by one of the saved states of the previous slices indicated by ref_layer_group_id and ref_subgroup_id (FIG. 25-(b)). Therefore, the context states of the slice belong to the last layer-group are initialized by the saved context states of the previous slices as shown in FIG. 25-(c). However, when there is a constraint of not referencing the subgroups in the same layer-group, the reception devcie (or decoders) may determine not to save the context of FGSs N+1 to 2N. With the prior information, a smart decoder may save the context butter.

FIG. 26 illustrates an example of context buffer management according to embodiments.

Referring to FIG. 26-(a), the transmission/reception device according to embodiments processes FGS 0(0,0) 26001 and stores the context information 26002 related to the group (FGS 0) in the context buffer.

Referring to FIG. 26-(b), the transmission/reception device according to embodiments may load the context information (states) 26004 of FGS 0 from the context buffer to process (encode or decode) FGS 2(1,1) 26003. After processing FGS 2(1,1), it may save the context states of FGS 2(1,1) in the context buffer. The loading of the context information may be performed with reference to the parameters reference ref_layer_group_id and ref_subgroup_id.

Referring to FIG. 26-(c), to process FGS N+2(2,1) 26005, the transmission/reception device according to embodiments may load the context information (context states(0,0)) 26006 of of FGS 0(0,0) 26001. Since FGS N+2(2,1) 26005 belongs to the last layer group, the context information thereof is not stored in the context buffer.

When flexible context reference is allowed, there are context states that are not used by the following slices. For example, consider root layer-group referencing where all the context states of the dependent slices are initialized by the context state saved from the first slice. Decoders do not know the overall referencing structure and there is possibility of using the current context in the following slices. However, as expected, the saved context states (1,0) to (1, N-1) are not used by any slices. In this example, the inefficiency results from lack of information on the decoder side.

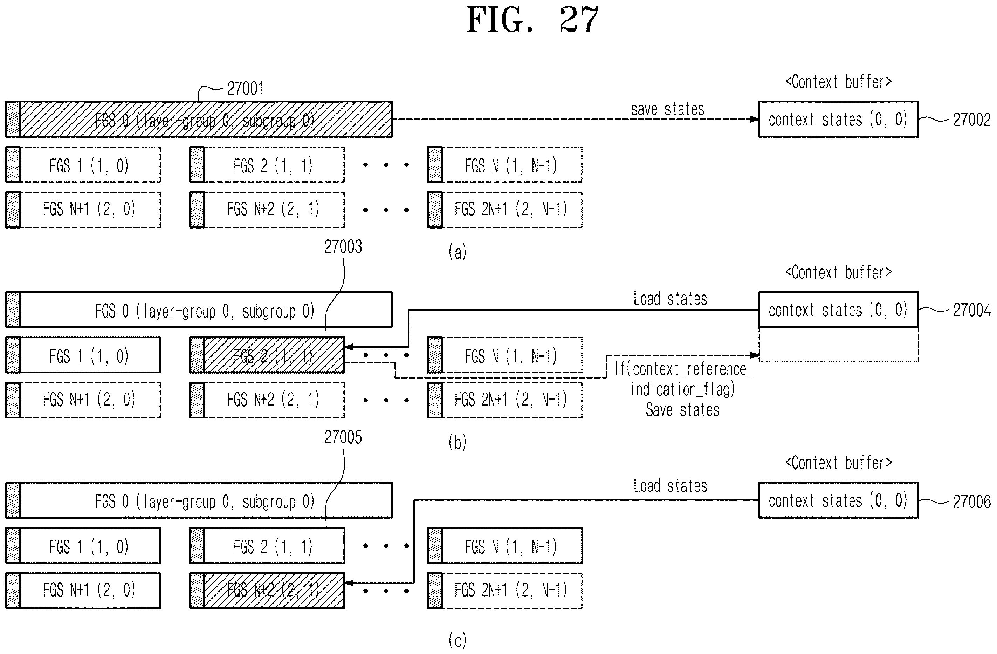

FIG. 27 illustrates an example of context buffer management according to embodiments.

Referring to FIG. 27-(b), the transmission/reception device/method according to embodiments may load the context information (context states(0,0)) 27004 of FGS 0(0,0) from the context buffer to process (encode or decode) FGS 2(1,1) 27003. Also, it may store the context information of FGS 2(1,1) in the context buffer based on the information of context_reference_indication_flag. That is, depending on the information of context_reference_indication_flag, the context information of FGS 2(1,1) may or may not be stored in the buffer. The information of context_reference_indication_flag may be generated and transmitted by the transmission device/method according to the embodiments, and may be used by the reception device/method according to the embodiments.

Referring to FIG. 27-(c), the transmission/reception device/method may load the context information (context states(0,0)) 27006 of FGS 0(0,0) 27001 from the context buffer to process (encode or decode) FGS N+2(2,1) 27005.

Because the context buffer always stores only the context information of FGS 0, the transmission/reception device according to the embodiments may use the buffer memory efficiently.

Regarding the transmission/reception device, to improve the context buffer management efficiency, embodiments propose a new signal to help decoders to indicate the usage of the current context in the followed slices and determine whether to save the context.

According to embodiments, the followed slice may represent a slice that is referenced by other slices, whereas a following slice may represent a slice that references other slices.

To improve context buffer management on the decoder side, context reference information is proposed from the perspective of the current slice. In other words, an indication of the context state referencing by the followed slices is proposed.

FIG. 27-(b) illustrates a use case of the proposed signal in the buffer management. Compared to the previous example without any information, saving context states in the context buffer is determined by the context reference indicator, called context_reference_indication_flag. When the context reference indicator is on, the decoder saves the current context state in the context buffer to allow use of the context state by the followed slices. On the other hand, when the context reference indicator is off, the decoder does not save the current context state in the context buffer to save the context memory. Comparing FIG. 27-(c) with FIG. 27-(b), the context buffer for the root-layer referencing case have only one context compared to the context buffer for the parent subgroup referencing case. The saved context memory size is N units, where N denotes the number of subgroups.

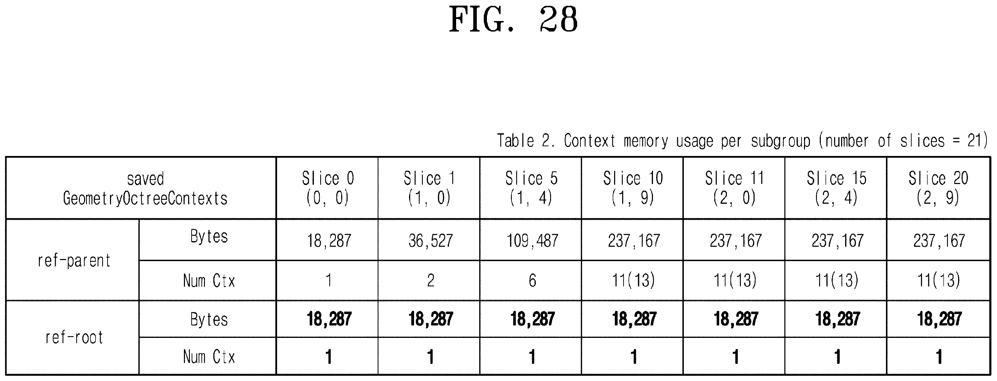

FIG. 28 shows a table comparing context memory usage of a context buffer according to embodiments.

To examine the effect of using flexible context inheritance, the fixed and flexible context reference approaches were compared regarding the memory usage and compression loss. The context reference of the parent subgroup, that is, ref-parent, and the context reference of the root layer-group, that is, ref-root, are considered as the representatives of the fixed and flexible context reference approaches.

For each method, the amount of memory used to save GeometryOctreeContext was estimated in each decoding process of slices. In this experiment, Statue_Klimt_vox12.ply was used for the input, which produces 10 subgroups under the test condition. The memory usage at each step is estimated using the tool of Visual Studio 15 2017.

Referring to FIG. 28, the memory usage of each method is illustrated in Bytes and the number of contexts. The number of contexts is induced based on that the size of one GeometryOctreeContext is 18,240 Bytes. For parent referencing, the number of saved contexts monotonically increases from slice 0 to slice 5. For slice 10, the anticipated number of context is 11 (= 1 + 10), but the number of context estimated by the actual size is 13, which is due to the memory allocation strategy of the compiler. Also the size of the memory for context saving is not changed for the slices of the last layer-group (i.e., slice 11 to slice 20). On the other hand, the number of context memory is not changed for ref-root case, which means that only one context is used for all slices from slice 1 to slice 20.

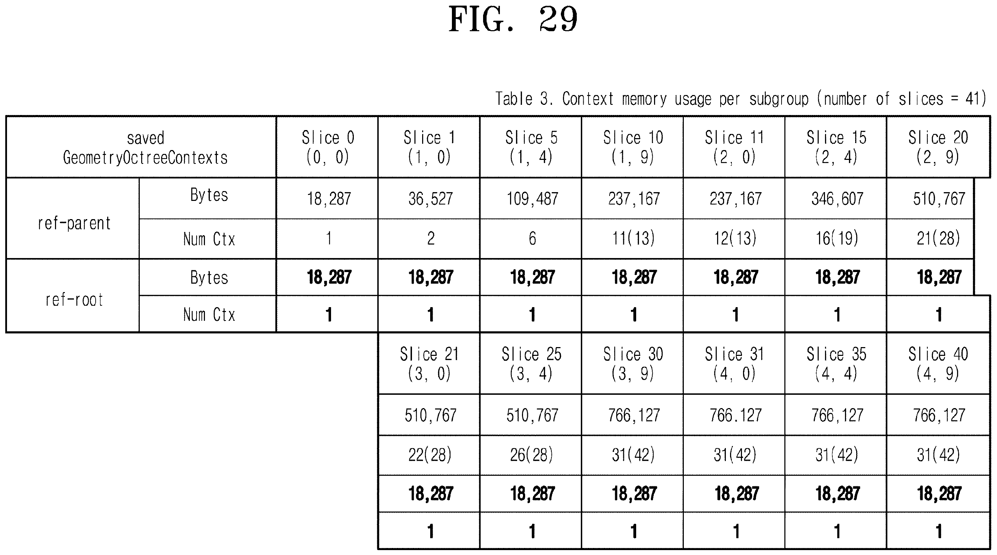

FIG. 29 shows a table comparing context memory usage of a context buffer according to embodiments.

To check the memory usage with the number of slices, the same memory check was performed for the same contents with the increased number of layer-groups. The layer-group structure is changed from 8-3-1 to 8-1-1-1-1. In the table of FIG. 29, the number of contexts refrenced for ref-parent is increased except for the slice 31 to 40, which are for layer-group 4. On the other hand, for ref-root, the number of the context memory is not changed for all slices.

Referring to FIG. 29, in the parent group reference method (ref-parent), as the number of slices (or sub-groups) increases, the number of stored contexts increases and memory usage grows. In contrast, in the root group reference method (ref-root), even when the number of slices (or sub-groups) increases, the number of stored contexts remains 1.

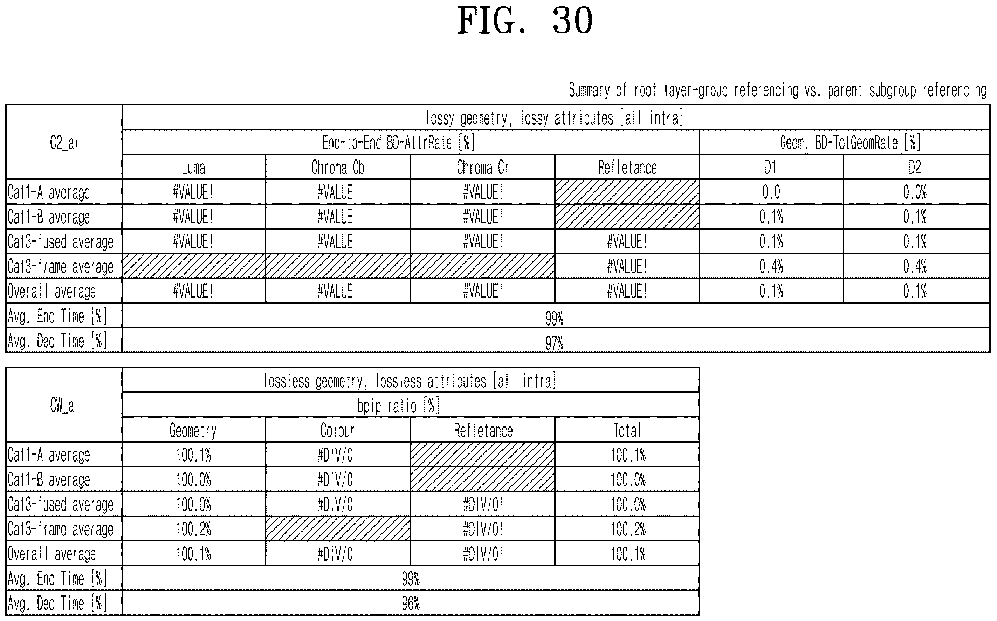

FIG. 30 is a table showing results of context buffer management according to embodiments.

To examine the compression loss according to change of context reference, the two methods are compared in terms of the average bitrate. Referring to the table of FIG. 30, the average compression loss is 0.1% for C2 and CW conditions. In terms of time consumption, root layer-group referencing shows 3% and 4% less decoding time than the parent subgroup referencing.

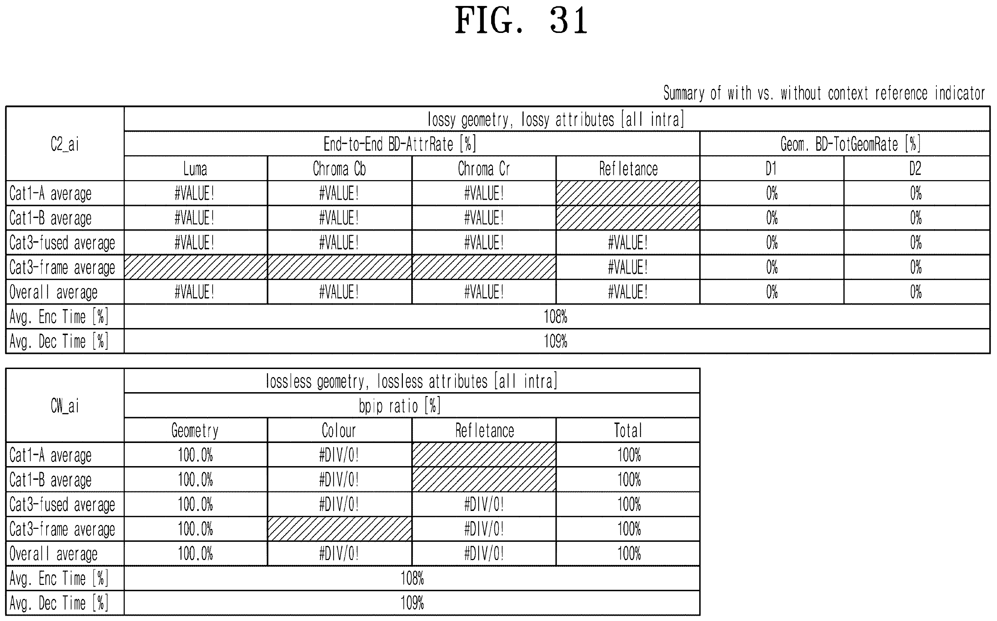

FIG. 31 is a table showing results of context buffer management according to embodiments.

To prevent coding efficiency degradation caused by slice segmentation, the receiver may use the context between slices, phiBuffer, planar context, and buffer continuity. The receiver may determine whether to store the context, phiBuffer, and planar context based on whether context reuse is allowed.

```
if (_dep_gbh.context_reuse_flag) {

_refIdxToSavedArrayIdx[curLayerGroup][_dep_gbh.subgroup_id]          =
_ctxtMemSaved.size();

_ctxtMemSaved.push_back(cur_ctxtMem);


if(_gps->geom_angular_mode_enabled_flag)

_phiBufferSaved.push_back(cur_phiBuffer);

if(_gps->geom_planar_mode_enabled_flag)

_planarSaved.push_back(cur_planar);

int idx = _refIdxToSavedArrayIdx[curLayerGroup][_dep_gbh.subgroup_id];

}
```

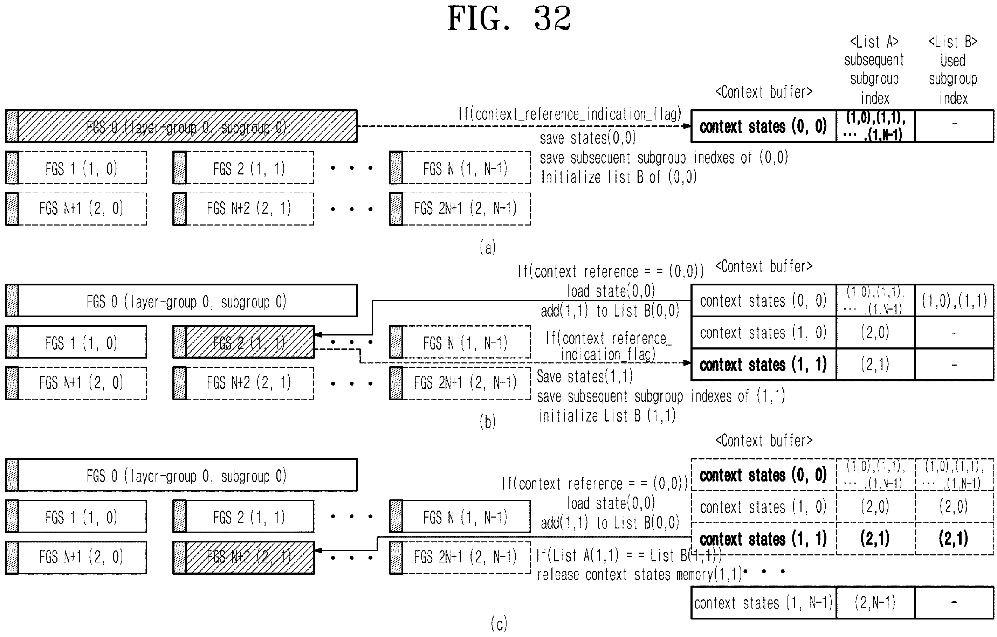

FIG. 32 illustrates a context buffer release method according to embodiments.

The method according to the embodiments includes determining the decoder context release timing.

When information indicating whether a context is reused is provided, it may be indicatd whether the contexted used in a specific slice is t obe stored in the context buffer, such that only the contexts needed for coding subsequent slices may be stored in the context buffer, and the context buffer memory may be efficiently used. However, in this case, the stored contexts remain in the context buffer until coding for the corresponding frame is complete. Accordingly, as the number of stored contexts increases, the burden on the context buffer may increase. To use the context buffer more efficiently, contexts that are no longer needed may be removed from the context buffer.

1) List-based Context Memory Management

FIG. 32 illustrates a method of maintaining a list of slices/subgroups that use the stored context information in the buffer to effectively manage context memory. FIG. 32 illustrates a method of managing context memory based on the list.

FIG. 32-(a): It may be indicated, using context_reference_indication_flag, whether the context used for coding the current slice is to be stored. Specifically, context_reference_indication_flag equal to 1 may indicate that the context of the current slice/subgroup may be used in the subsequent slices/subgroups, and may be stored in the context buffer. The index of the context may be set to be equal to the subgroup index to use the subsequent context. In this regard, when information about the slices/subgroups using the current context is given as a list, a target list may be stored and compared with the list that is actually used. The list of slices/subgroups using the context may be pre-examined and delivered by the encoder. Alternatively, the context reference relationship may be estimated by the decoder based on a predetermined layer group structure to generate a list. For example, when the method of referencing the context of the parent subgroup is fixed, a list of child subgroups of the current subgroup may be examined, which may be referred to as List A in this embodiment.

FIG. 32-(b): When a new slice/subgroup is received, the context used for decoding the slice/subgroup may be specified based on the context reference ID. In the following example, the context corresponding to (0,0) may be used, and the index of the current slice/subgroup (1,1) may be added to the subgroup list used. The list of slices/subgroups that use a specific context in the coding process is referred to as List B. When context_reference_indication_flag is equal to 1, it means that the context of the current slice/subgroup will be used later, and thus it may be stored in the context buffer, and List B (1,1) of the context buffer (1,1) may be initialized.

FIG. 32-(c): When List A and List B are the same for a specific context buffer, the context buffer may be released to manage memory. For example, when the context reference ID is (1,1), the coding may use context state (1,1) in the context buffer. The index of the current slice/subgroup (2,1) may be added to List B. In this case, List B is the same as List A = ((2,1)), which may indicate that context state (1,1) will no longer be used. In this case, by releasing the memory storing context state (1,1), the context buffer may be efficiently managed.

Embodiments include a method of specifying the index of a context based on the layer group index and subgroup index. When each slice is assigned a unique slice index, the context buffer list may be managed based on the slice indices.

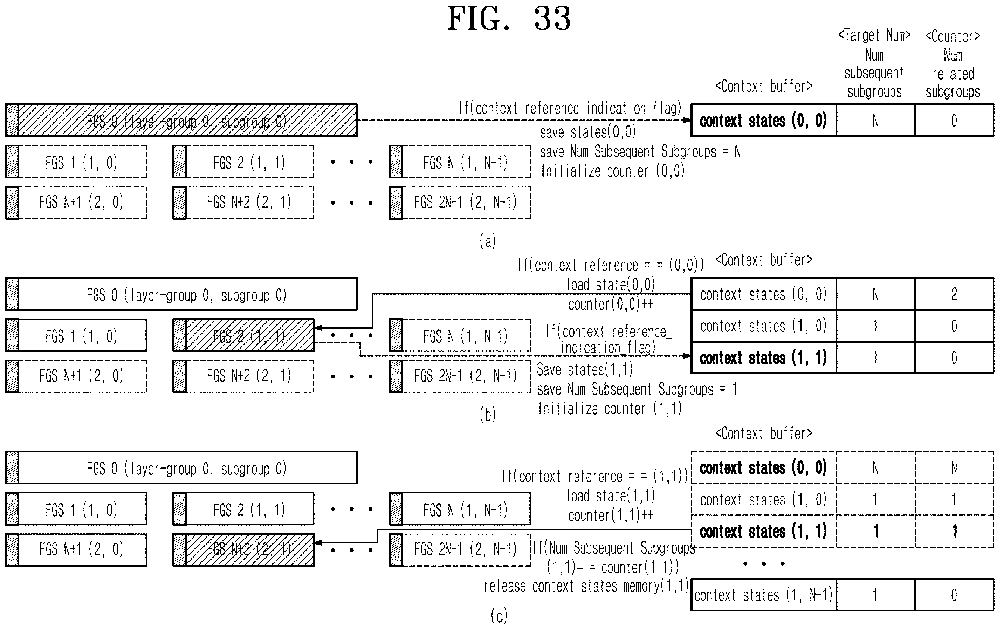

FIG. 33 illustrates a context buffer release method according to embodiments.

Embodiments include a method of managing context memory based on the number of references.

By managing context states that are no longer used in real time based on the number of times each context state is used, the context buffer may be used efficiently. According to embodiments, the context buffer may be managed through a target number and a counter for each context state in the context buffer.

FIG. 33-(a): The target number may store the number of times each context state is used, and the counter may update the number of times the context state has been used. FIG. 33-(a) illustrates the case of the first slice/subgroup. When context_reference_indication_flag is equal to 1 or layer-group slicing is used, context state (0,0) may be stored in the context buffer. Also, the target number N may be store N, the number of times the context state is used. It may be set equal to N, the number of subgroups belonging to layer-group 1 when using the context state of the parent subgroup as an example. In other words, the list of child subgroups of FGS 0 may be FGS 1 (1,0), FGS 2 (1,1),..., FGS N (1, N-1), and the number of elements N in the list may be specified as the target number.

FIG. 33-(b): When coding a new slice/subgroup, the context reference of the slice/subgroup may be searched for in the context buffer based on the context reference ID. Context state (0,0) may be used, and the counter may be incremented by 1. Since context state (0,0) is already used in coding FGS 1 (1,0), the counter may be 2. When context_reference_indication_flag is equal to 1, it indicates that this context may be used by subsequent slices/subgroups, and therefore the context state of FGS 2 (1,1) may be stored in the context buffer. In this case, the target number may store the number of child slices/subgroups using context state (1,1).

FIG. 33-(c): The memory usage of the context buffer may be managed through memory release for a context state having the same target number and counter as managed in the context buffer. Context state (1,1) corresponding to the context reference ID of FGS N+2 may be used, and counter (1,1) may be incremented by 1. In this case, the target number and counter of context state (1,1) are equal, which means context state (1,1) will no longer be used. Thus, deleting context state (1,1) from the context buffer will not affect coding of subsequent slices/subgroups. By deleting the context states that are no longer used from the context buffer, memory usage of the context buffer may be minimized.

The following is an example of decoder code implementation.

```
if (_dep_gbh.context_reference_indication_flag) {

_refIdxToSavedArrayIdx[curLayerGroup][_dep_gbh.subgroup_id]          =
_ctxtMemSaved.size();

_ctxtMemSaved.push_back(cur_ctxtMem);

_numSubsequentSubgroups.push_back(_dep_gbh.numSubsequentSubgroups);

if (_gps->geom_angular_mode_enabled_flag)

_phiBufferSaved.push_back(cur_phiBuffer);


    if (_gps->geom_planar_mode_enabled_flag)

    _planarSaved.push_back(cur_planar);

    }

    _numSubsequentSubgroups[refArrayIdx]--;

    if (_numSubsequentSubgroups[refArrayIdx] == 0) {

    _ctxtMemSaved[refArrayIdx].resetMap();

    _ctxtMemSaved[refArrayIdx].reset();

    }
```

For the target number for each context state the encoder may examine and transmit the number of subsequent subgroups. When necessary, by additionally providing a list of slices/subgroups used for the context reference, whether the number of subsequent subgroups is correct may be verified and whether to delete the context state may be determined.

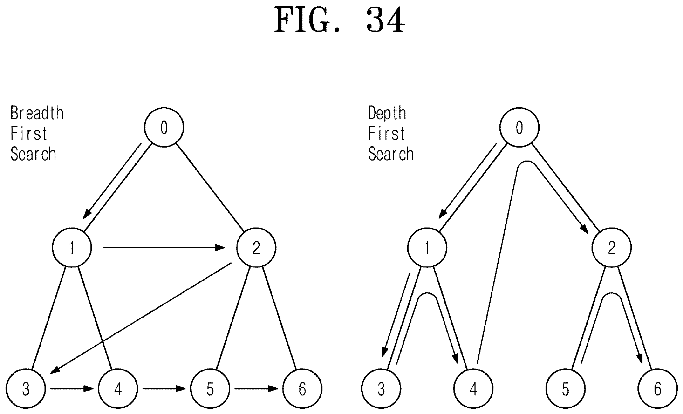

FIG. 34 illustrates a context memory management method according to embodiments.

Embodiments may include a method of managing context memory based on the structure of data unit coding.

Slices/subgroups may be transmitted according to a certain order. Representative methods include breadth-first search (BFS) and depth-first search (DFS). BFS is a method in which the subgroups belonging to the same layer group are coded first, and then the subgroups belonging to child layer groups are coded. In contrast, DFS is a method in which the children of the same parent are coded after reaching the subgroup corresponding to the maximum depth.

When each node is considered as an FGS slice index, it may be assumed that layer group 0 includes slice 0, layer group 1 includes slices 1 and 2, and layer group 2 includes slices 3, 4, 5, and 6. Also, slices connected by solid lines are assumed to form a parent-child pair having a parent-child relationship. When coding is performed based on BFS, coding order may be 0, 1, 2, 3, 4, 5, and 6. When coding is performed based on DFS, coding order may be 0, 1, 3, 4, 2, 5, and 6.

When context buffer memory is managed based on slice order, the following behavior may occur. Here, it may be assumed that the parent context state is used as a reference context. If coding is based on BFS, the context state of the parent layer group is no longer used when the coding of subgroups belonging to each layer group is complete. For example, context state 0 is used when coding slices 1 and 2. At the time slice 2 is coded, context state 1 is no longer used. In this case, when the layer group changes (slice 2), the context state of the parent subgroups (the context state of slice 0) may be deleted from the context buffer.

When coding is based on DFS, a context state may be deleted when coding of child subgroups is complete or when the layer group changes (switch from bottom to root). After coding slices 3 and 4, coding moves to slice 2. Slices 3 and 4 belong to layer group 2, and slice 2 belongs to layer group 1. Slices 3 and 4 are coded based on the context state of slice 1. Since context state 1 is no longer needed, it may be deleted from the context buffer.

In this manner, context memory may be used efficiently without additional information such as a list of subsequent subgroups or the number of subsequent subgroups.

FIG. 35 illustrates a bitstream containing point cloud data according to embodiments.

The encoder according to embodiments may encode point cloud data and generate related parameter information to generate a bitstream. The decoder according to embodiments may receive the bitstream and decode the point cloud data based on the parameter information.

Information about separated slices may be defined in parameter sets and SEI messages as follows. It may be defined in the sequence parameter set (SPS), geometry parameter set (GPS), attribute parameter set (APS), geometry slice header (GSH), and attribute slice header (ASH). Depending on the application or system, it may be defined at corresponding or separate locations, resulting in different scopes and application methods. That is, it may have different meanings depending on the position where the signal is delivered. When defined in the SPS, it may be constantly applied to the entire sequence. When defined in the GPS, it may be used for geometry reconstruction. When defined in the APS, it may be used for attribute reconstruction. When defined in the tile parameter set (TPS), the signaling may be applied only to points within the tile. When delivered per slice, the signaling may be applied only to the slice. Depending on the application or system, it may be defined at corresponding or separate locations, resulting in different scopes and application methods. Additionally, syntax elements defined below may apply not only to the current point cloud data stream but also to multiple point cloud data streams, and may be transmitted through higher-level parameter sets.

Each abbreviation has the following meaning and may be referred to by other terms within the same scope: SPS: Sequence Parameter Set; GPS: Geometry Parameter Set; APS: Attribute Parameter Set; TPS: Tile Parameter Set; Geom: Geometry bitstream = geometry slice header + geometry slice data; Attr: Attribute bitstream = attribute blick header + attribute brick data.

Accroding to embodiments, the information may be generated independently of the coding technique or in conjunction with the coding method. A tile parameter set may be defined to support regionally different scalability. Alternatively, by defining Network Abstraction Layer (NAL) units and transmitting relevant information for selecting layers, such as layer_id, the bitstream may be selected at the system level.

Hereinafter, parameters (which may be referred to as metadata, signaling information, or the like) according to embodiments may be generated in the process of the transmitter according to embodiments described below and may be transmitted to the receiver according to embodiments for use in the reconstruction process.

For example, the parameters according to embodiments may be generated by a metadata processor (or metadata generator) of the transmission device according to embodiments described below and acquired by a metadata parser of the reception device according to embodiments.

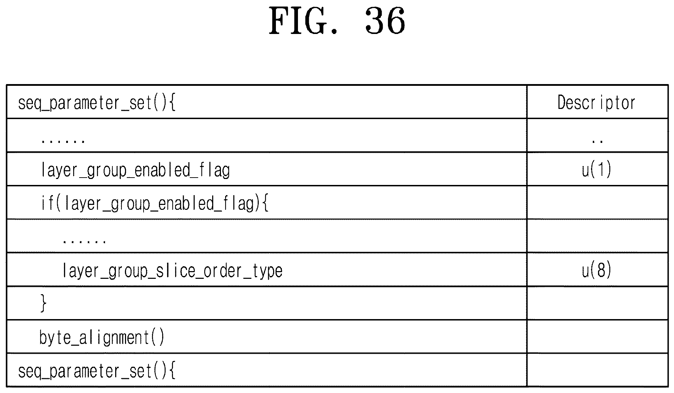

FIG. 36 illustrates a sequence parameter set of a bitstream according to embodiments.

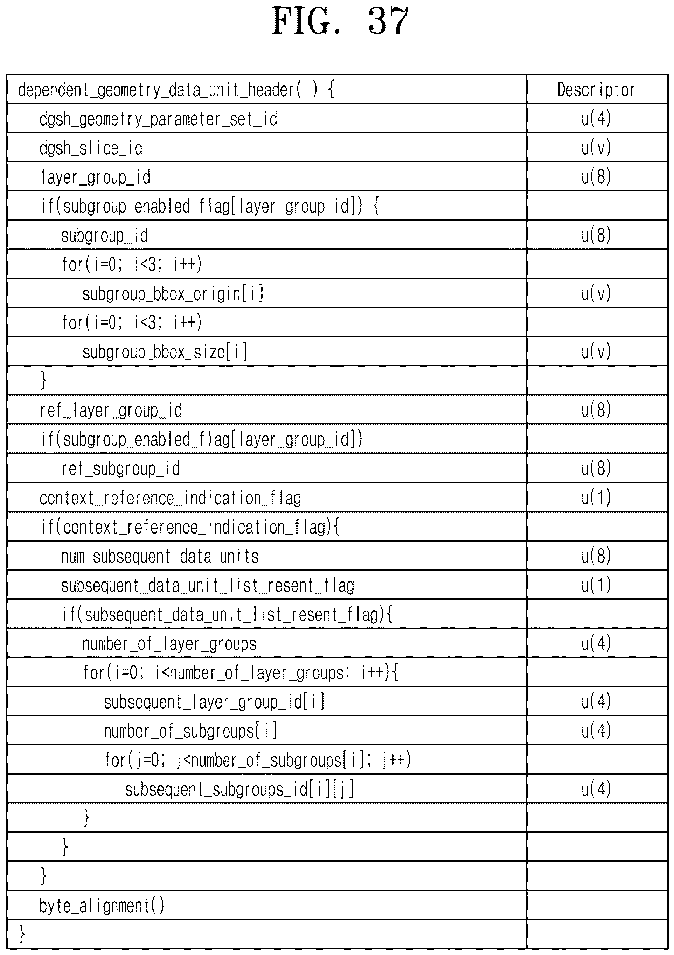

FIG. 37 illustrates a dependent geometry data unit header of a bitstream according to embodiments.

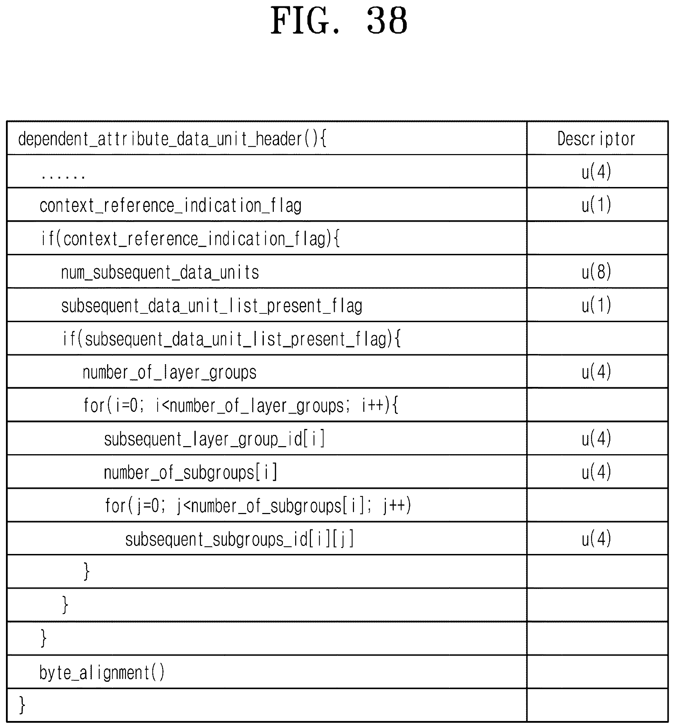

FIG. 38 illustrates a dependent attribute data unit header of a bitstream according to embodiments.

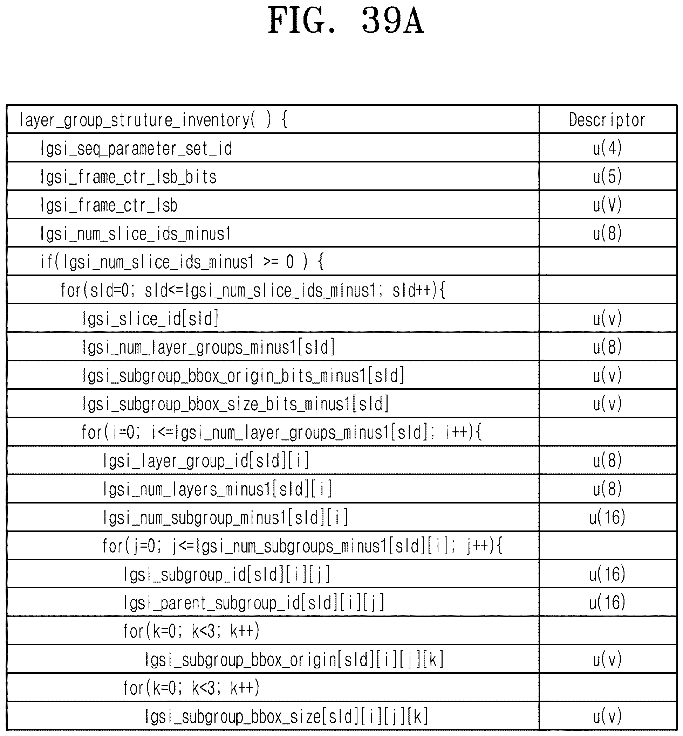

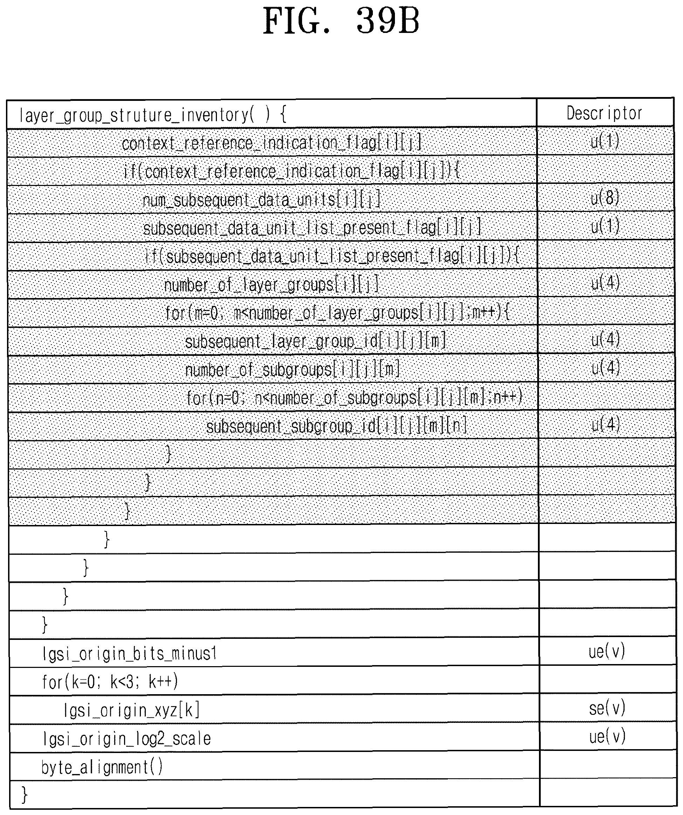

FIGs. 39A and 39B illustrate a layer group structure inventory according to embodiments.

The definitions of the information in FIGS. 36 to 39 are given below.

When layer_group_enabled_flag is equal to 1, it indicates that the geometry and/or attribute bitstream of a frame or a tile is contained in multiple slices matched to a group of coding layers or the subgroup thereof. When layer_group_enabled_flag is equal to 0, it indicates that the geometry bitstream of a frame or a tile is contaned in a single slice.

layer_group_slice_order_type indicates the ordering type of layer group slices. layer_group_slice_order_type equal to 0 indicates breadth first search order of the layer-group slices. layer_group_slice_order_type equal to 1 indicates depth first search order of the layer-group slices. layer_group_slice_order_type equal to 2 indicates that the ordering type is not specified.

context_reference_indication_flag equal to 1 indicates that the context state of the current dependent slice will be inherited to one or more following dependent slices. context_reference_indication_flag equal to 0 indicates that the context state of the current dependent slice will not be inherited to the following dependent slice.

The decoder may manage the context buffer using the context_reference_indication_flag. When context_reference_indication_flag is equal to 1, the context state of the current dependent slice is saved in the context buffer at the end of the decoding. When context_reference_indication_flag is equal to 0, the context state of the current dependent slice is not saved in the context buffer.

num_subsequent_data_units indicates the number of the subsequent dependent data units which use the context state of the current data unit.

subsequent_data_unitlist_present_flag equal to 1 indicates that the list of the subsequent data units is present. subsequent_data_unit_list_present_flag equal to 0 indicates that the list of the subsequent data units is not present.

number_of_layer_groups indicates the number of layer-groups in the list of the subsequent data units.

subsequent_layer_group_id indicates the layer-group index of a subsequent data unit.

number_of_subgroups indicates the number of subgroups in a layer-group of the list of the subsequent data units.

subsequent_subgroup_id indicates the subgroup index in a layer-group of a subsequent data unit..

Layer-Group Structure Inventory Syntax

lgsi_seq_parameter_set_id indicates a value of sps_seq_parameter_set_id. It is a requirement of bitstream conformance that lgsi_seq_parameter_set_id is equal to 0.

lgsi_frame_ctr_lsb_bits indicates the length in bits of the lgsi_frame_ctr_lsb syntax element.

lgsi_frame_ctr_lsb indicates the lgsi_frame_ctr_lsb_bits least significant bits of FrameCtr from which the group structure inventory is valid. A layer-group structure inventory remains valid until it is replaced by another layer-group structure inventory.

lgsi_num_slice_ids_minus1 plus 1 indicates the number of slices present in the layer-group structure inventory.

gi_slice_id indicates the slice ID of the sid-th slice within the layer-group structure inventory. It is a requirement of bitstream conformance that all values of lgsi_slice_id are unique within a layer-group structure inventory.

lgsi_num_layer_groups_minus1 + 1 indicates the number of layer-groups.

lgsi_layer_group_id specifies the indicator of a layer-group. lgsi_layer_group_id shall be in the range of 0 to lgsi_num_layer_groups_minus1.

lgsi_num_layers_minus1 + 1 indicates the number of coded layer in the slice of i-th layer-group in the sid-th slice. The total number of the coded layer required to decode the n-th layer-group is equal to sum of lgsi_num_layers_minus1 [sid][i] + 1 for i from 0 to n.

lgsi_num_subgroups_minus1 + 1 indicates the number of number of sub-groups in the i-th layer-group in the sid-th slice.

lgsi_subgroup_id specifies the indicator of a layer-group. lgsi_subgroup_id shall be in the range of 0 to lgsi_num_subgroups_minus1.

lgsi_parent_subgroup_id specifies the indicator of a sub-group in the layer-group indicated by lgsi_subgroup_id. lgsi_parent_subgroup_id shall be in the range of 0 to gi_num_subgroups_minus1 in the layer-group indicated by lgsi_subgroup_id.

lgsi_subgroup_bbox_origin and lgsi_subgroup_bbox_size indicate a bounding box of the current sub-group.

lgsi_subgroup_bbox_origin indicates the origin of the subgroup bounding box of the subgroup indicated by lgsi_subgroup_id in the layer-group indicated by lgsi_layer_group_id.

lgsi_subgroup_bbox_size indicates the size of the subgroup bounding box of the subgroup indicated by lgsi_subgroup_id in the layer-group indicated by lgsi_layer_group_id.

lgsi_origin_bits_minus + 1 indicates the length in bits of the lgsi_origin_xyz syntax element.

lgsi_origin_xyz indicates the origin of all partitions. The value of lgsi_origin_xyz[ k ] shall be equal to sps_bounding_box_offset[ k ].

lgsi_origin_log2_scale indicates a scaling factor to scale components of lgsi_origin_xyz. The value of lgsi_origin_log2_scale shall be equal to sps_bounding_box_offset_log2_scale.

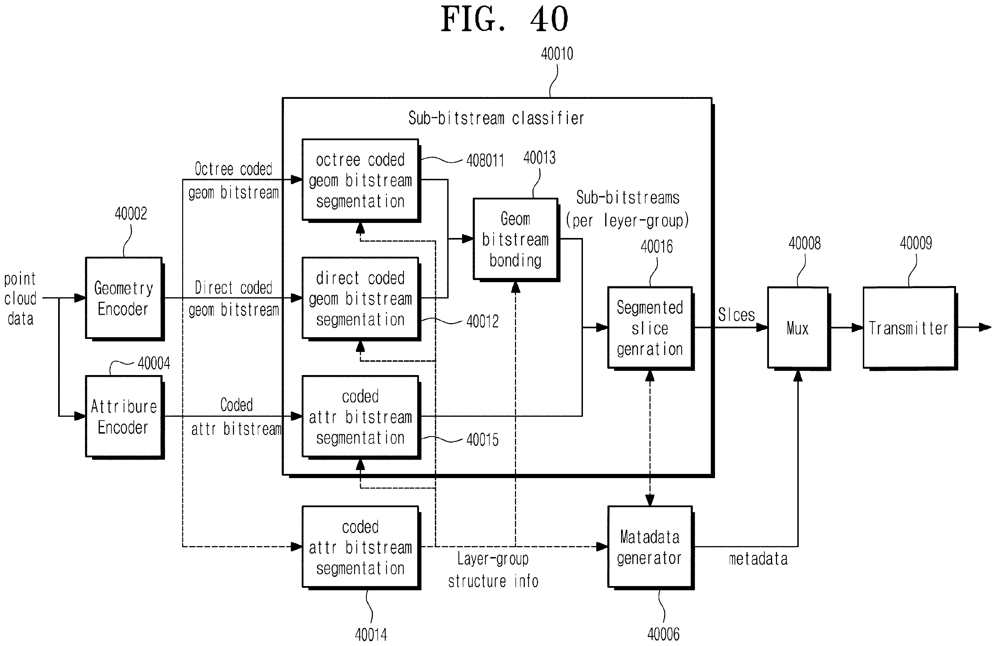

FIG. 40 illustrates a point cloud data transmission device/method according to embodiments.

Each component of the device of FIG. 40 corresponds to hardware, software, a processor, and/or a combination thereof.

Referring to FIG. 40, an embodiment of detailed functional configuration for encoding/transmitting PCC data is shown. When point cloud data is input, the encoder may encode geometry data (e.g., XYZ coordinates, phi-theta coordinates) and attribute data (e.g., color, reflectance, intensity, grayscale, opacity, medium, material, glossiness) separately. The compressed data is divided into units for transmission. A sub-bitstream generator 38010 may divide the data into appropriate units for selecting necessary information at the bitstream level according to layering structure information so as to be packed.

According to embodiments, when different types of bitstreams are contained in a single slice, the encoder may separate the generated bitstreams (e.g., AEC bitstream or DC bitstream) according to purpose. Subsequently, based on the layer group information, each slice or adjacent information may be included in a single slice according to the layer group information. Then, a metadata generator 38006 may deliver information such as layer-group information, layers included in the layer-group, the number of nodes, layer depth, the number of nodes included in a sub-group, bitstream type, bitstream_offset, bitstream_length, and bitstream direction according to each slice ID.

When point cloud data is input to the transmission device according to embodiments, a geometry encoder 40002 encodes position information (geometry data, e.g., XYZ coordinates, phi-theta coordinates), and an attribute encoder 40004 encodes attribute information (attribute data, e.g., color, reflectance, intensity, grayscale, opacity, medium, material, glossiness).

The compressed (encoded) data is divided into units for transmission. A sub-bitstream generator 40010 may divide the data into appropriate units for selecting necessary information at the bitstream level according to layering structure information so as to be packed.

According to embodiments, the octree-coded geometry bitstream is input to an octree coded geom bitstream segmentation unit 40011, and the direct-coded geometry bitstream is input to a direct coded geom bitstream segmentation unit 40012.

The octree coded geom bitstream segmentation unit 40011 divides the octree-coded geometry bitstream into one or more groups and/or sub-groups based on the information about the segmented (split) slices generated by the layer-group structure generator 40014 and/or information related to direct coding.

Also, the direct coded geom bitstream segmentation unit 40012 divides the direct-coded geometry bitstream into one or more groups and/or sub-groups based on the information about the segmented (split) slices generated by the layer-group structure generator 40014 and/or information related to direct coding.

The outputs of the octree coded geom bitstream segmentation unit 40011 and the direct coded geom bitstream segmentation unit 40012 are input to a geometry bitstream bonding unit 40013.

The geometry bitstream bonding unit 40013 performs geometry bitstream bonding based on the information about the segmented (split) slices generated by the layer-group structure generator 40014 and/or information related to direct coding and outputs the sub-bitstreams to the segmented slice generator on a per layer group basis. For example, the geometry bitstream bonding unit 40013 concatenate the AEC bitstream and DC bitstream within a single slice. The final slices are generated by the geometry bitstream bonding unit.

A coded attribute bitstream segmentation unit (40015) divides the coded attribute bitstream into one or more groups and/or sub-groups based on the information about the segmented (split) slices generated by the layer-group structure generator 40014 and/or information related to direct coding. One or more groups and/or sub-groups of attribute information may be linked with one or more groups and/or sub-groups for geometry information or may be generated independently.

A segmented slice generator 40016 receives inputs from the geometry bitstream bonding unit 40013 and/or the coded attribute bitstream segmentation unit 40015 based on the information about the segmented (split) slices generated by the metadata generator 40006 and/or information related to direct coding and segments one slice into multiple slices. Each sub-bitstream is transmitted through each slice segment. At this time, the AEC bitstream and DC bitstream may be transmitted through a single slice or through different slices.

The multiplexer 40008 multiplexes the outputs from the segmented slice generator 40016 and the metadata generator 40006 per layer and outputs the multiplexing results to the transmitter 40009.

When different types of bitstreams (e.g., AEC and DC bitstreams) are contained in a single slice, the geometry encoder 40002 may separate the generated bitstreams (e.g., AEC bitstream and DC bitstream) according to the purpose. Subsequently, based on the information about the segmented (split) slices generated by the layer-group structure generator 40014 and/or the metadata generator 40006 and/or information related to direct coding (i.e., layer-group information), each slice or adjacent information may be included in a single slice. According to embodiments, the information about the segmented (split) slices and/or information related to direct coding (e.g., layer-group information, layers included in the layer-group, the number of nodes, layer depth, the number of nodes included in a sub-group, bitstream type, bitstream_offset, bitstream_length, and bitstream direction according to each slice ID) may be transmitted through the metadata generator 40006. The information about the segmented (split) slices and/or information related to direct coding (e.g., layer-group information, layers included in the layer-group, the number of nodes, layer depth, the number of nodes included in a sub-group, bitstream type, bitstream_offset, bitstream_length, and bitstream direction according to each slice ID) may be signaled in the SPS, APS, GPS, geometry data unit header, attribute data unit header, or SEI message.

FIG. 41 illustrates a point cloud data reception device/method according to embodiments.

The reception method of FIG. 41 may follow the reverse process of the transmission method of FIG. 40. Each component of the device of FIG. 41 corresponds to hardware, software, a processor, and/or a combination thereof.

FIG. 41 shows an embodiment of detailed functional configuration for receiving/decoding PCC data. When a bitstream is input, the reception device according to the embodiments may distinguish between bitstreams for position information and bitstreams for attribute information. A sub-bitstream classifier 41010 may forward the bitstream to an appropriate decoder based on the information in the bitstream header. Alternatively, the layer required by the receiver may be selected at this stage. Geometry data and attribute data may be restored from the classified bitstreams by a geometry decoder 41006 and an attribute decoder 41008, respectively, according to the data characteristics, and may then be converted into a format for final output by a renderer 41009.

When different types of geometry bitstreams are included, each bitstream may be decoded separately using a bitstream splitter 41014. In embodiments of the present disclosure, octree-coded arithmetic entropy coded bitstreams and direct-coded bitstreams may be distinguished and processed by the geometry decoder. The bitstreams may be separated based on the information such as bitstream type, bitstream_offset, bitstream_length, and bitstream direction. For the separated bitstreams, the same type of bitstream segments may be concatenated (connected). This operation may be included to handle bitstreams separated by layer-group as a continuous bitstream, and the bitstreams may be ordered according to the layer-group information. If bitstreams are parallel-processable, they may be decoded by the decoder without concatenation.

A receiver 41002 may receive a bitstream.

A demultiplexer 41004 may output point cloud data and metadata (signaling information) contained in the bitstream.

The sub-bitstream classifier 41010 may select slices, split the bitstream, and may concatenate bitstream segments of the octree-coded geometry bitstream and direct-coded geometry bitstream.

A metadata parser 41005 may provide information about slices and/or layer groups.

A slice selector 41012 may select one or more slices included in the bitstream.

A bitstream splitter 41014 may split the geometry bitstream. Geometry data may be encoded based on octree coding and/or direct coding.

A bitstream segment concatenation unit 41016 may concatenate octree-coded and direct-coded geometry bitstreams according to the coding types thereof. For the layer-group-based geometry bitstream, bitstream segments containing multiple groups/sub-groups related to the decoding area may be concatenated.

The geometry decoder 41006 may decode geometry bitstreams to output geometry data.

The attribute decoder 41008 may decode attribute data contained in the selected slices.

The renderer 41009 may render point cloud data based on the geometry data and/or attribute data.

FIG. 42 illustrates a point cloud data reception method according to embodiments.

FIG. 42 illustrates the operation of the sub-bitstream classifier 41010 of FIG. 41 in more detail.

The reception device receives data on a slice basis, and the metadata parser delivers parameter set information such as SPS, GPS, APS, or TPS ((e.g., information about the segmented (split) slices and/or information related to direct coding). Based on the delivered information, it may be determined whether scalability is available. When scalability is available, the slice structure for scalable transmission is identified as shown in FIG. 42 (42011). Based on the information delivered in the GPS, such as num_scalable_layers, scalable_layer_id, tree_depth_start, tree_depth_end, node_size, num_nodes, num_slices_in_scalable_layer, and slice_id, the geometry slice structure may be identified.

When the value of aligned_slice_structure_enabled_flag is 1 (42017), the attribute slice structure may be identified similarly (for example, when geometry is encoded based on the octree, attributes are encoded based on scalable LoD or scalable RAHT, and geometry/attribute slice pairs generated through the same slice partitioning have the same number of nodes for the same octree layer).

When the structures are identical, the range of geometry slice IDs is determined according to the target scalable layer, the range of attribute slice IDs is determined by slice_id_offset, and geometry/attribute slices are selected according to the determined range (42012-42014, 42018, 42019).

When aligned_slice_structure_enabled_flag = 0, the attribute slice structure is determined separately based on the information delivered in the APS, such as num_scalable_layers, scalable_layer_id tree_depth_start, tree_depth_end, node_size, num_nodes, num_slices_in_scalable_layer, and slice_id. According to the scalable purpose, the required range of attribute slice IDs may be limited, and before reconstruction, the slices needed for each slice ID may be selected based on the range (42020-42021, 42019). The selected geometry/attribute slices are then provided as input to the reception device.

In the discussion above, the decoding process according to the slice structure has been described based on scalable transmission or scalable selection at the receiver. However, when scalable_transmission_enabled_flag is equal to 0, the process of ranging geom/attr slice IDs may be skipped, and the whole slice may be selected, such that it can also be applied to a non-scalable process. In this case, information about prior slices (e.g., slices belonging to a higher layer or slices specified by ref_slice_id) may still be used based on the slice structure information (e.g., information about the segmented (split) slices and/or information related to direct coding) delivered in parameter sets such as SPS, GPS, APS, and TPS.

As such, when there are different types of geometry bitstreams, all slices within the range may be selected for the different types of bitstreams during slice selection. If the different types of bitstreams are included in a single slice, each bitstream may be separated based on offset and length information, and the separated bitstreams may be reordered according to the layer group order for decoding.

FIG. 43 illustrates a layer group-based point cloud data encoding method according to embodiments.

The encoder according to embodiments includes the flowchart of FIG. 43. When point cloud data is input, the layer-group structure is constructed, and related parameters are acquired. The reference relationships between sub-groups are established based on the layer-group structure (or already provided by external inputs). Encoding may then be performed based on the layer-group structure and reference structure. For each subgroup/slice, it is determined whether it is used as a reference. If it is used as a reference, context_reference_indication_flag = 1 may be set. Otherwise, context_reference_indication_flag = 0 may be set. Whether a slice/subgroup is used as a reference may be determined after encoding or directly through the reference structure. If used as a reference, the number of times the slice/subgroup is used as a reference may be signaled as the number of subsequent data units (num_subsequent_data_units). Furthermore, when a specific list of slices/subgroups used as the reference is delivered, subsequent_subgroup_list_present_flag may be set to 1, and the subsequent data unit list may be delivered as the layer-group index and subgroup index. Parameters required for decoding are contained in the data unit header, and the encoded compressed bitstream is contained in the data unit to generate bitstreams for each slice. This process may be performed for every data unit/slice/subgroup.

FIG. 44 illustrates a layer group-based point cloud data decoding method according to embodiments.

The decoding method of FIG. 44 may follow the reverse process of the encoding method of FIG. 43.

For each slice, the decoder may analyze the data unit header to prepare for decoding. Context states used for decoding may be obtained from a context buffer using ref_layer_group_id and ref_subgroup_id. The decoder is initialized based on the obtained context state, and then performs decoding. Whether to store new context states generated during the decoding may be determined by context_reference_indication_flag contained in the data unit header. If a context state is used for subsequent slices/subgroups/data units, the context_reference_indication_flag is signaled as 1. In this case, for memory management for the context state, the target number of subsequent data units may be determined by num_subsequent_data_units. Also, when subsequent_subgroup_list_present_flag = 1, the layer-group and subgroup indices of the subsequent data units may be stored in a list of subsequent data units.

For used context states, the context state counter and list of used data units may be updated. Then, when the target number of subsequent data units of the context state matches the counter, or the list of subsequent data units (list_given) matches the updated list of used data units (list_updated), the context state may be released from the momory of the counter buffer.

The context buffer management may be applied the decoder and the encoder in the same manner. It may also apply when referencing the context buffer not only across layer-group slicing based slices and but also among slices in or between general frames.

FIGS. 45 and 46 illustrate a point cloud data transmission/reception device/method according to embodiments.

Embodiments include a method of dividing compressed data for point cloud data according to certain criteria before transmission. When layered coding is used, compressed data may be divided according to layers, which may improve storage and transmission efficiency at the transmitting side.

FIG. 45 illustrates an embodiment of compressing and providing geometry and attributes of point cloud data. In PCC-based services, the compression rate or data volume may be adjusted for transmission according to receiver performance or transmission environment. When point cloud data is grouped per slice, a change in the receiver performance or transmission environment may require either 1) pre-transcoding and separately storing bitstreams for each environment before transmission such that selection is performed at the time of transmission, or 2) transcoding the data prior to transmission. In this case, if the number of receiver environments to support increases or the transmission environment frequently changes, a storage issue may arise or a delay issue may arise due to transcoding.

Referring to FIG. 46, when compressed data is divided according to layers for transmission, only the necessary parts of pre-compressed data may be selectively transmitted at the bitstream stage without additional transcoding. This is efficient in terms of storage space because only one storage space is needed per stream. Further, it is efficient in terms of bandwidth because only the necessary layers are selectively transmitted (through the bitstream selector).

The encoder 4601 according to embodiments may select the necessary parts from the bitstream (through the bitstream selector). The selected bitstream may then be transmitted to the decoder 4602. The decoder 4602 may reconstruct partial geometry and partial attributes from the received bitstream.

FIG. 47 illustrates a point cloud data transmission/reception device/method according to embodiments.

Embodiments include a method of dividing compressed data of a point cloud according to certain criteria before transmission. When layered coding is used, compressed data may be divided according to layers, which may improve efficiency at the receiving side.

FIG. 47 shows the operation performed at transmitting/receiving side when point cloud data composed of layers is transmitted. When information enabling the entire point cloud data to be restored regardless of receiver performance is transmitted, the receiver may need to reconstruct the point cloud data through decoding and then select only the necessary layers through a process (data selection or sub-sampling). In this case, a delay may occur in the receiver, which targets low latency, or decoding may not be allowed depending on the receiver performance because the received bitstream has already been decoded.

When the bitstream is divided into slices before transmission, the receiver may selectively deliver the bitstream to the decoder depending on the decoder performance or the density of point cloud data to be represented in the application field. In this case, as selection is performed before decoding, decoder efficiency may be enhanced, and decoders of different performance levels may be supported. In other words, the transmission and reception devices according to embodiments may transmit and receive selected bitstreams, and reconstruct the selected bitstreams. Thereby, decoders of different performance levels may be supported.

Various elements of the embodiments may be implemented by hardware, software, firmware, or a combination thereof. The elements of the embodiments may be implemented on a single chip such as hardware circuitry. According to embodiments, they may optionally be implemented on separate chips. According to embodiments, at least one of the elements of the embodiments may be implemented within one or more processors including instructions for performing the operations according to the embodiments.

The operations according to the above-described embodiments may be performed by a transmission device and/or reception device according to the embodiments. The transmission/reception device may include a transceiver configured to transmit and receive media data, a memory configured to store instructions (program code, algorithms, flowcharts, and/or data) for processes according to the embodiments, and a processor configured to control the operations of the transmission/reception device.

The processor may be referred to as a controller, and may correspond to, for example, hardware, software, or a combination thereof. The operations according to the embodiments described above may be performed by the processor. Additionally, the processor may be implemented as an encoder/decoder or the like for the operations of the embodiments described above.

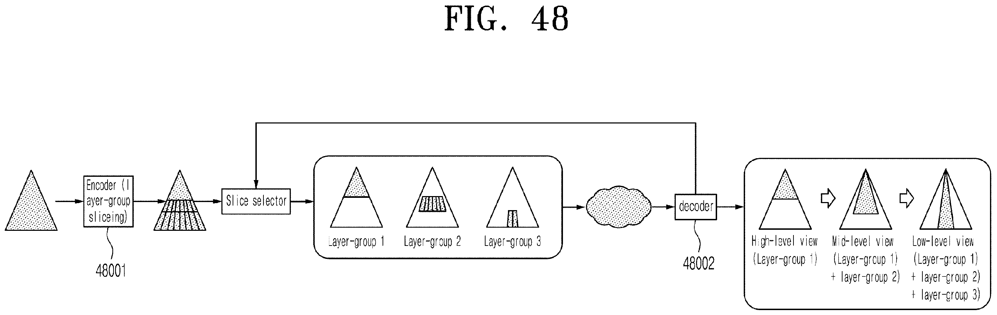

FIG. 48 illustrates a point cloud data transmission/reception device/method according to embodiments.

Referring to FIG. 48, multi-resolution ROIs may be supported by the scalability of hierarchical slicing and spatial accessibility. In FIG. 48, the encoder 4801 may generate bitstream slices of octree layer-groups or spatial subgroups of each layer-group. Upon request, a slice matching the ROI of each resolution is selected and transmitted. The overall bitstream size is smaller than the tile-based approaches because the bitstream contains no details other than the requested ROI. At the receiving side, the decoder 4802 may combine the slices to produce three outputs: 1) a high-level view output from layer-group slice 1, 2) a mid-level view output from layer-group slice 1 and selected subgroups of layer-group 2, and 3) a low-level view of fine detail output from layer-group 1 and selected subgroups of layer-group 2 and 3. As the outputs can be generated progressively, the receiver may provide viewing experience such as zooming from high-level view to low-level view with a gradual increase in resolution.

The encoder 4801 according to the embodiments is a point cloud encoder, which may correspond to a geometry encoder and an attribute encoder. The encoder may slice point cloud data based on layer groups (or groups). A layer may be referred to as a depth of a tree, an LOD level, or the like. The depth of the octree of geometry and/or the level of attribute LOD layers may be split into layer groups (or subgroups).

The slice selector, in connection with the encoder 4801, may select split slices (or sub-slices) for selective partial transmission, for example, selectively transmitting layer groups 1 to 3.

The decoder 4802 may decode selectively and partially transmitted point cloud data. For example, the high-level view may be decoded based on layer group 1 (high depth/layer/level or index close to 0, the root). Then, the mid-level view may be decoded based on layer groups 1 and 2, by increasing the depth/level index slightly compared to decoding only layer group 1. The low-level view may be decoded based on layer groups 1 to 3.

FIG. 49 illustrates a point cloud data encoding method according to embodiments.

The point cloud data encoding method according to the embodiments of FIG. 49 includes the operations described in relation to the transmission device 10000, the point cloud video encoder 10002, and the transmitter 10003 of FIG. 1; the acquisition 20000-encoding 20001-transmission 20002 of FIG. 2, the encoder of FIG. 11, the layer group-based encoding of FIGS. 12 to 22, the context buffer memory control of FIGS. 23 to 34, the bitstream/parameter generation of FIGS. 35 to 39, the encoder of FIG. 40, the encoding of FIG. 43, and the encoder of FIGS. 45 to 48.

The point cloud data encoding method according to the embodiments may include encoding point cloud data.

The method may further include transmitting a bitstream containing the point cloud data.

Operaton S4900 of encoding point cloud data may include encoding geometry of the point cloud data and encoding attributes of the point cloud data. At least one of the geometry or attributes may be contained in a fine slice, which includes a layer group including at least one layer or a subgroup in the layer group.

The point cloud data may be encoded based on a context for the point cloud data contained in the fine slice.

Based on information indicating whether a context for the fine slice is stored, the context of the fine slice may be used used in decoding a subsequent fine slice of the fine slice. A a first list including index information related to subgroups for the fine slice may be generated, and a second list including index information related to subgroups decoded based on a specific context may be generated. Based on that the information included in the first list is the same as the information included in the second list, a context stored in a memory may be deleted.

Based on information indicating a context for the fine slice is stored, the context for the fine slice may be used in encoding a subsequent fine slice of the fine slice, information about the number of subgroups for the fine slice may be generated, and a count indicating subgroups encoded based on a specific context may be generated. Based on that the information about the number of subgroups is equal to the count, a context stored in a memory may be deleted.

The encoding method of FIG. 49 may be performed by a point cloud data encoding device including an encoder configured to encode point cloud data and a transmitter configured to transmit a bitstream containing the point cloud data.

FIG. 50 illustrates a point cloud data decoding method according to embodiments.

The point cloud data decoding method according to the embodiments of FIG. 50 includes the operations described in relation to the reception device 10004, the receiver 10005, and the point cloud video decoder 10006 of FIG. 1, the transmission 20002-decoding 20003-rendering 20004 of FIG. 2, the decoder of FIG. 7, the reception device of FIG. 9, the device of FIG. 10, the decoder of FIG. 11, the layer group-based decoding of FIGS. 12 to 22, the context buffer memory control of FIGS. 23 to 34, the bitstream/parameter parsing of FIGS. 35 to 39, the decoder of FIG. 41, the decoding of FIGS. 42 and 44, and the decoder of FIGS. 45 to 48.

The decoding method of FIG. 50 may follow the reverse process of the encoding method of FIG. 49.

The point cloud data decoding method according to the embodiments may include receiving a bitstream containing point cloud data (S5000).

The decoding method may further include decoding the point cloud data (S5001).

Referring to FIG. 22, operation S5001 of decoding the point cloud data may include decoding geometry of the point cloud data and decoding attributes of the point cloud data. At least one of the geometry or the attributes is contained in a fine slice, the fine slice containing a layer group including at least one layer or a subgroup in the layer group. The fine slice refers to the FGS described above. The fine slice represents a slice containing point cloud data for each layer group and/or subgroup.

Referring to FIG. 32, the point cloud data may be decoded based on a context for the point cloud data contained in the fine slice.

Referring to FIG. 32, based on information indicating a context for the fine slice is stored, the context for the fine slice may be used in decoding a subsequent fine slice of the fine slice, a first list including index information related to subgroups for the fine slice may be generated, and a second list including index information related to subgroups decoded based on a specific context may be generated. Based on that the information included in the first list is the same as the information included in the second list, a context stored in a memory may be deleted.

Referring to FIG. 32, based on information indicating a context for the fine slice is stored, the context for the fine slice may be used in decoding a subsequent fine slice of the fine slice, information about the number of subgroups for the fine slice may be generated, and a count indicating subgroups decoded based on a specific context may be generated. Based on that the information about the number of subgroups is equal to the count, a context stored in a memory may be deleted.

Referring to FIG. 33, fine slices containing at least one of the geometry or the attributes may have a parent-child relationship based on the layer group or the subgroup. The fine slices may be decoded based on a breadth-first search.

Referring to FIG. 34, fine slices containing at least one of the geometry or the attributes may have a parent-child relationship based on the layer group or the subgroup. The fine slices may be decoded based on a breadth-first search, wherein, based on that after decoding a first layer group, a second layer group is decoded, a context for the first layer group may be deleted from a memory. The fine slices may be decoded based on a depth-first search, wherein, based on switching from a leaf direction to a root direction, contexts for found fine slices may be deleted from the memory.

Referring to FIG. 35, the bitstream may contain at least one of information (layer_group_slice_order_type) indicating a search order of fine slices containing at least one of a layer group or a subgroup, information (context_reference_indication_flag) indicating whether a context for a current fine slice is referenced for a subsequent fine slice, information (num_subsequent_data_units) indicating a number of subsequent dependent data units using a context for a current data unit, information (number_of_layer_groups) indicating a number of layer groups in a list of subsequent data units, information (subsequent_layer_group_id) indicating a layer group index of the subsequent data units, information (number_of_subgroups) indicating a number of subgroups in each of the layer groups in the list of subsequent data units, or information (subsequent_subgroup_id) indicating a subgroup index in each of the layer groups of the subsequent data units.

The decoding method of FIG. 50 may be performed by a point cloud data decoding device including a receiver configured to receive a bitstream containing point cloud data and a decoder configured to decode the point cloud data.

According to embodiments, in encoding and decoding multiple slices (FGSs), the efficiency of memory usage for the context buffer may be increased. Additionally, FGSs may provide benefits such as spatial random access and scalable coding.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/-reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related details have been described in the best mode for carrying out the embodiments.

[Industrial Applicability]

As described above, the embodiments are fully or partially applicable to a point cloud data transmission/reception device and system.

Those skilled in the art may change or modify the embodiments in various ways within the scope of the embodiments.

Embodiments may include variations/modifications within the scope of the claims and their equivalents.

**Claims**

1.  A method of decoding point cloud data, the method comprising:

    receiving a bitstream containing point cloud data; and
    decoding the point cloud data.

2.  The method of claim 1, wherein the decoding of the point cloud data comprises:

    decoding geometry of the point cloud data; and
    decoding attributes of the point cloud data,
    wherein at least one of the geometry or the attributes is contained in a fine slice, the fine slice containing a layer group including at least one layer or a subgroup in the layer group.

3.  The method of claim 2, wherein the point cloud data is decoded based on a context for the point cloud data contained in the fine slice.

4.  The method of claim 2, wherein, based on information indicating a context for the fine slice is stored:

    the context for the fine slice is used in decoding a subsequent fine slice of the fine slice;
    a first list including index information related to subgroups for the fine slice is generated; and
    a second list including index information related to subgroups decoded based on a specific context is generated,
    wherein, based on that the information included in the first list is the same as the information included in the second list, a context stored in a memory is deleted.

5.  The method of claim 2, wherein, based on information indicating a context for the fine slice is stored:

    the context for the fine slice is used in decoding a subsequent fine slice of the fine slice;
    information about a number of subgroups for the fine slice is generated; and
    a count indicating subgroups decoded based on a specific context is generated,
    wherein, based on that the information about a number of subgroups is equal to the count, a context stored in a memory is deleted.

6.  The method of claim 5, wherein fine slices containing at least one of the geometry or the attributes have a parent-child relationship based on the layer group or the subgroup,
    wherein the fine slices are decoded based on a breadth-first search.

7. The method of claim 2, wherein fine slices containing at least one of the geometry or the attributes have a parent-child relationship based on the layer group or the subgroup,

wherein the fine slices are decoded based on a breadth-first search, wherein, based on that after decoding a first layer group, a second layer group is decoded, a context for the first layer group is deleted from a memory, wherein the fine slices are decoded based on a depth-first search, wherein, based on switching from a leaf direction to a root direction, contexts for found fine slices are deleted from the memory.

8. The method of claim 1, wherein the bitstream contains at least one of:

information indicating a search order of fine slices containing at least one of a layer group or a subgroup;
information indicating whether a context for a current fine slice is referenced for a subsequent fine slice;
information indicating a number of subsequent dependent data units using a context for a current data unit;
information indicating a number of layer groups in a list of subsequent data units;
information indicating a layer group index of the subsequent data units;
information indicating a number of subgroups in each of the layer groups in the list of subsequent data units; or
information indicating a subgroup index in each of the layer groups of the subsequent data units.

9. A device for decoding point cloud data, comprising:

a receiver configured to receive a bitstream containing point cloud data; and
a decoder configured to decode the point cloud data.

10. A method of encoding point cloud data, the method comprising:

encoding point cloud data; and
transmitting a bitstream containing the point cloud data.

11. The method of claim 10, wherein the encoding of the point cloud data comprises:

encoding geometry of the point cloud data; and
encoding attributes of the point cloud data,
wherein at least one of the geometry or the attributes is contained in a fine slice, the fine slice containing a layer group including at least one layer or a subgroup in the layer group.

12. The method of claim 11, wherein the point cloud data is encoded based on a context for the point cloud data contained in the fine slice.

13. The method of claim 11, wherein, based on information indicating a context for the fine slice is stored:

the context for the fine slice is used in encoding a subsequent fine slice of the fine slice;
a first list including index information related to subgroups for the fine slice is generated; and
a second list including index information related to subgroups encoded based on a specific context is generated,
wherein, based on that the information included in the first list is the same as the information included in the second list, a context stored in a memory is deleted.

14. The method of claim 11, wherein, based on information indicating a context for the fine slice is stored:

the context for the fine slice is used in encoding a subsequent fine slice of the fine slice;
information about a number of subgroups for the fine slice is generated; and
a count indicating subgroups encoded based on a specific context is generated,
wherein, based on that the information about a number of subgroups is equal to the count, a context stored in a memory is deleted.

15. A device for encoding point cloud data, comprising:

an encoder configured to encode point cloud data; and
a transmitter configured to transmit a bitstream containing the point cloud data.

# FIG. 1

# FIG. 2

Acquisition (20000) → Ply file -geometry -attribute → Encoding (20001) → Encoded -geometry -attribute bitstream → Transmission (20002) → Decoding (20003) → Decoded -geometry -attribute → Rendering (20004)

Feedback (20005)

Head orientation information, viewport information

Head orientation information, viewport information

EP 4 742 677 A1

# FIG. 3

# FIG. 4

# FIG. 5

Level of details

EP 4 742 677 A1

# FIG. 6

# FIG. 7

geomerty
bitstream

attributes
bitstream

7000 — Arithmerix decode

7005 — Arithmerix decode

7001 — Synthesize
octree

7002 — synthesize surface
approximation

7006 — Inverse quantize

7003 — Reconstruct
geometry

7008 — Gnnerate
LOD

RAHT

7007 —

7009 — Inverse
lifting

7004 — Inverse transform
coordinates

7010 — Inverse transform colors

position

attributes

# FIG. 8

Data input unit ~8000

Position values of points          Attribute values of points

Set value, etc. ~8007

8001~ Quantization processor ← Metadata processor → Color transform processor ~8008

8002~ Voxelization processor ← → Attribute transform processor ~8009

8003~ Octree occupancy code generator ← → Predicting/lifting/RAHT transform processor ~8010

8004~ Surface model processor ← → Arithmetic encoder ~8011

8005~ Intra/inter-coding processor ←

8006~ Arithmetic coder ←

Sharing reconstructed position values

~8012

Transmission processor

# FIG. 9

Reception

Receiver ~9000

Reception processor ~9001

Geometry bitstream        Attribute bitstream

Set value, etc.      ~9006

9002~ Arithmetic decoder   Metadata parse   Arithmetic decoder ~9007

9003~ Occupancy code-based octree reconstruction processor   Inverse quantization processor ~9008

9004~ Surface model processor (triangle reconstruction, up-sampling, voxelization)   Predicting/lifting/RAHT inverse transform processor ~9009

9005~ Inverse quantization processor   Color inverse transform processor ~9010

Sharing reconstructed position values

Renderer ~9011

# FIG. 10

# FIG. 11

# FIG. 12

# FIG. 13

| Geo data | G | LoD(0)~LoD(N) |
|---|---|---|

| Attr data | A | LoD(0)~LoD(N) |
|---|---|---|

# FIG. 14

| Geo data | G | LoD0 | G | R1 | G | R2 |
|---|---|---|---|---|---|---|

| Attr data | A | LoD0 | A | R1 | A | R2 |
|---|---|---|---|---|---|---|

LoD0

LoD0 1

LoD0 2

# FIG. 15

# FIG. 16

# FIG. 17

Bitstream | G | LoD0 | A | LoD0 | G | R1 | A | R1

21000

0(root)
1
2
3
4
5
6
7(leaf)

LOD 0
LOD 1

21010

discarded | G | R2 | A | R2

# FIG. 18

EP 4 742 677 A1

Bitstream | G | LoD0 | A | LoD0 | G | R1 | A | R1 | G | R2 |

2000

0(root)
1
2
3
4
5
6
7(leaf)

LOD 0

LOD 1

discarded | A | R2 |

22010

# FIG. 19

Slices :            (a)

Slices :            (b)

Slice :            (c)

# FIG. 20

Geometry tree structure contained in a single slice

(a)

Geometry tree structure contained in segmented slices

(b)

FIG. 21

# FIG. 22

Geom/attr coding layer structure

EP 4 742 677 A1

# FIG. 23

23001 — FGS 0 (layer-group 0, subgroup 0) save states

Refer context

23002 — FGS 1 (1, 0) save states — FGS 2 (1, 1) save states — • • • — FGS N (1, N-1) save states

Refer context — Refer context — Refer context

23003 — FGS N+1 (2, 0) — FGS N+2 (2, 1) — • • • — FGS 2N+1 (2, N-1)

# FIG. 24

24001 — FGS 0 (layer-group 0, subgroup 0) save states

Refer context

24002 — FGS 1 (1, 0) — FGS 2 (1, 1) — • • • — FGS N (1, N-1)

24003 — FGS N+1 (2, 0) — FGS N+2 (2, 1) — • • • — FGS 2N+1 (2, N-1)

# FIG. 25

EP 4 742 677 A1

# FIG. 26

EP 4 742 677 A1

(a)

(b)

(c)

# FIG. 27

# FIG. 28

EP 4 742 677 A1

Table 2. Context memory usage per subgroup (number of slices = 21)

| saved GeometryOctreeContexts | | Slice 0 (0, 0) | Slice 1 (1, 0) | Slice 5 (1, 4) | Slice 10 (1, 9) | Slice 11 (2, 0) | Slice 15 (2, 4) | Slice 20 (2, 9) |
|---|---|---|---|---|---|---|---|---|
| ref-parent | Bytes | 18,287 | 36,527 | 109,487 | 237,167 | 237,167 | 237,167 | 237,167 |
| | Num Ctx | 1 | 2 | 6 | 11(13) | 11(13) | 11(13) | 11(13) |
| ref-root | Bytes | **18,287** | **18,287** | **18,287** | **18,287** | **18,287** | **18,287** | **18,287** |
| | Num Ctx | **1** | **1** | **1** | **1** | **1** | **1** | **1** |

# FIG. 29

Table 3. Context memory usage per subgroup (number of slices = 41)

| saved GeometryOctreeContexts | | Slice 0 (0, 0) | Slice 1 (1, 0) | Slice 5 (1, 4) | Slice 10 (1, 9) | Slice 11 (2, 0) | Slice 15 (2, 4) | Slice 20 (2, 9) |
|---|---|---|---|---|---|---|---|---|
| ref-parent | Bytes | 18,287 | 36,527 | 109,487 | 237,167 | 237,167 | 346,607 | 510,767 |
| | Num Ctx | 1 | 2 | 6 | 11(13) | 12(13) | 16(19) | 21(28) |
| ref-root | Bytes | **18,287** | **18,287** | **18,287** | **18,287** | **18,287** | **18,287** | **18,287** |
| | Num Ctx | **1** | **1** | **1** | **1** | **1** | **1** | **1** |
| | | | Slice 21 (3, 0) | Slice 25 (3, 4) | Slice 30 (3, 9) | Slice 31 (4, 0) | Slice 35 (4, 4) | Slice 40 (4, 9) |
| | | | 510,767 | 510,767 | 766,127 | 766.127 | 766,127 | 766,127 |
| | | | 22(28) | 26(28) | 31(42) | 31(42) | 31(42) | 31(42) |
| | | | **18,287** | **18,287** | **18,287** | **18,287** | **18,287** | **18,287** |
| | | | **1** | **1** | **1** | **1** | **1** | **1** |

EP 4 742 677 A1

# FIG. 30

Summary of root layer-group referencing vs. parent subgroup referencing

| C2_ai | lossy geometry, lossy attributes [all intra] | | | | | |
| | End-to-End BD-AttrRate [%] | | | | Geom. BD-TotGeomRate [%] | |
| | Luma | Chroma Cb | Chroma Cr | Refletance | D1 | D2 |
| Cat1-A average | #VALUE! | #VALUE! | #VALUE! | ////// | 0.0 | 0.0% |
| Cat1-B average | #VALUE! | #VALUE! | #VALUE! | ////// | 0.1% | 0.1% |
| Cat3-fused average | #VALUE! | #VALUE! | #VALUE! | #VALUE! | 0.1% | 0.1% |
| Cat3-frame average | ////// | ////// | ////// | #VALUE! | 0.4% | 0.4% |
| Overall average | #VALUE! | #VALUE! | #VALUE! | #VALUE! | 0.1% | 0.1% |
| Avg. Enc Time [%] | 99% | | | | | |
| Avg. Dec Time [%] | 97% | | | | | |

| CW_ai | lossless geometry, lossless attributes [all intra] | | | |
| | bpip ratio [%] | | | |
| | Geometry | Colour | Refletance | Total |
| Cat1-A average | 100.1% | #DIV/0! | ////// | 100.1% |
| Cat1-B average | 100.0% | #DIV/0! | ////// | 100.0% |
| Cat3-fused average | 100.0% | #DIV/0! | #DIV/0! | 100.0% |
| Cat3-frame average | 100.2% | ////// | #DIV/0! | 100.2% |
| Overall average | 100.1% | #DIV/0! | #DIV/0! | 100.1% |
| Avg. Enc Time [%] | 99% | | | |
| Avg. Dec Time [%] | 96% | | | |

EP 4 742 677 A1

# FIG. 31

EP 4 742 677 A1

Summary of with vs. without context reference indicator

| C2_ai | lossy geometry, lossy attributes [all intra] | | | | | |
|---|---|---|---|---|---|---|
| | End-to-End BD-AttrRate [%] | | | | Geom. BD-TotGeomRate [%] | |
| | Luma | Chroma Cb | Chroma Cr | Refletance | D1 | D2 |
| Cat1-A average | #VALUE! | #VALUE! | #VALUE! | ///// | 0% | 0% |
| Cat1-B average | #VALUE! | #VALUE! | #VALUE! | ///// | 0% | 0% |
| Cat3-fused average | #VALUE! | #VALUE! | #VALUE! | #VALUE! | 0% | 0% |
| Cat3-frame average | ///// | ///// | ///// | #VALUE! | 0% | 0% |
| Overall average | #VALUE! | #VALUE! | #VALUE! | #VALUE! | 0% | 0% |
| Avg. Enc Time [%] | 108% | | | | | |
| Avg. Dec Time [%] | 109% | | | | | |

| CW_ai | lossless geometry, lossless attributes [all intra] | | | |
|---|---|---|---|---|
| | bpip ratio [%] | | | |
| | Geometry | Colour | Refletance | Total |
| Cat1-A average | 100.0% | #DIV/0! | ///// | 100% |
| Cat1-B average | 100.0% | #DIV/0! | ///// | 100% |
| Cat3-fused average | 100.0% | #DIV/0! | #DIV/0! | 100% |
| Cat3-frame average | 100.0% | ///// | #DIV/0! | 100% |
| Overall average | 100.0% | #DIV/0! | #DIV/0! | 100% |
| Avg. Enc Time [%] | 108% | | | |
| Avg. Dec Time [%] | 109% | | | |

# FIG. 32

**(a)**

FGS 0 (layer-group 0, subgroup 0)

FGS 1 (1, 0)   FGS 2 (1, 1)   · · ·   FGS N (1, N-1)

FGS N+1 (2, 0)   FGS N+2 (2, 1)   · · ·   FGS 2N+1 (2, N-1)

If(context_reference_indication_flag)
save states(0,0)
save subsequent subgroup inedxes of (0,0)
Initialize list B of (0,0)

<Context buffer>

| | <List A> subsequent subgroup index | <List B> Used subgroup index |
|---|---|---|
| **context states (0, 0)** | **(1,0),(1,1), ... ,(1,N-1)** | – |

**(b)**

FGS 0 (layer-group 0, subgroup 0)

FGS 1 (1, 0)   FGS 2 (1, 1)   · · ·   FGS N (1, N-1)

FGS N+1 (2, 0)   FGS N+2 (2, 1)   · · ·   FGS 2N+1 (2, N-1)

If(context reference == (0,0))
load state(0,0)
add(1,1) to List B(0,0)
If(context reference_indication_flag)
Save states(1,1)
save subsequent subgroup indexes of (1,1)
initialize List B (1,1)

<Context buffer>

| | | |
|---|---|---|
| context states (0, 0) | (1,0),(1,1), ... ,(1,N-1) | (1,0),(1,1) |
| context states (1, 0) | (2,0) | – |
| **context states (1, 1)** | (2,1) | – |

**(c)**

FGS 0 (layer-group 0, subgroup 0)

FGS 1 (1, 0)   FGS 2 (1, 1)   · · ·   FGS N (1, N-1)

FGS N+1 (2, 0)   FGS N+2 (2, 1)   · · ·   FGS 2N+1 (2, N-1)

If(context reference == (0,0))
load state(0,0)
add(1,1) to List B(0,0)
If(List A(1,1) == List B(1,1))
release context states memory(1,1)· · ·

<Context buffer>

| | | |
|---|---|---|
| **context states (0, 0)** | (1,0),(1,1), ... ,(1,N-1) | (1,0),(1,1), ... ,(1,N-1) |
| context states (1, 0) | (2,0) | (2,0) |
| **context states (1, 1)** | **(2,1)** | **(2,1)** |
| context states (1, N-1) | (2,N-1) | – |

# FIG. 33

**(a)**

FGS 0 (layer-group 0, subgroup 0)

FGS 1 (1, 0)  FGS 2 (1, 1) · · · FGS N (1, N-1)

FGS N+1 (2, 0)  FGS N+2 (2, 1) · · · FGS 2N+1 (2, N-1)

If(context_reference_indication_flag)
save states(0,0)
save Num Subsequent Subgroups = N
Initialize counter (0,0)

<Context buffer>

| | <Target Num> Num subsequent subgroups | <Counter> Num related subgroups |
|---|---|---|
| context states (0, 0) | N | 0 |

**(b)**

FGS 0 (layer-group 0, subgroup 0)

FGS 1 (1, 0)  FGS 2 (1, 1) · · · FGS N (1, N-1)

FGS N+1 (2, 0)  FGS N+2 (2, 1) · · · FGS 2N+1 (2, N-1)

If(context reference = = (0,0))
load state(0,0)
counter(0,0)++

If(context reference_indication_flag)
Save states(1,1)
save Num Subsequent Subgroups = 1
Initialize counter (1,1)

<Context buffer>

| | | |
|---|---|---|
| context states (0, 0) | N | 2 |
| context states (1, 0) | 1 | 0 |
| context states (1, 1) | 1 | 0 |

**(c)**

FGS 0 (layer-group 0, subgroup 0)

FGS 1 (1, 0)  FGS 2 (1, 1) · · · FGS N (1, N-1)

FGS N+1 (2, 0)  FGS N+2 (2, 1) · · · FGS 2N+1 (2, N-1)

If(context reference = = (1,1))
load state(1,1)
counter(1,1)++

If(Num Subsequent Subgroups (1,1)= = counter(1,1))
release context states memory(1,1)

<Context buffer>

| | | |
|---|---|---|
| context states (0, 0) | N | N |
| context states (1, 0) | 1 | 1 |
| context states (1, 1) | 1 | 1 |
| · · · | | |
| context states (1, N-1) | 1 | 0 |

# FIG. 34

# FIG. 35

slice 0

slice n

| SPS | GPS | APS$_0$ | APS$_1$ | TPS | Geom$_0^0$ | Attr$_0^0$ | Attr$_1^0$ | ... | Geom$_0^n$ | Attr$_0^n$ | Attr$_1^n$ |

Geom_slice_header | Geom_slice_data

$\left\{\begin{array}{l}\text{Tile(0).tile\_bounding\_box\_xyz0;}\\\text{Tile(0).tile\_bounding\_box\_whd;}\\\quad\cdots\\\text{Tile(n).tile\_bounding\_box\_xyz0;}\\\text{Tile(n).tile\_bounding\_box\_whd;}\end{array}\right\}$

$\left\{\begin{array}{l}\text{geom\_ geom\_ parameter\_set\_id;}\\\text{geom\_tile\_id;}\\\text{geom\_slice\_id;}\\\text{geomBoxOrigin;}\\\text{geom\_box\_log2\_scale;}\\\text{geom\_max\_node\_size\_log2;}\\\text{geom\_num\_points;}\end{array}\right\}$

EP 4 742 677 A1

# FIG. 36

| seq_parameter_set(){ | Descriptor |
|---|---|
| ...... | .. |
| layer_group_enabled_flag | u(1) |
| if(layer_group_enabled_flag){ | |
| ...... | |
| layer_group_slice_order_type | u(8) |
| } | |
| byte_alignment() | |
| seq_parameter_set(){ | |

# FIG. 37

| dependent_geometry_data_unit_header( ) { | Descriptor |
|---|---|
| dgsh_geometry_parameter_set_id | u(4) |
| dgsh_slice_id | u(v) |
| layer_group_id | u(8) |
| if(subgroup_enabled_flag[layer_group_id]) { | |
| subgroup_id | u(8) |
| for(i=0; i<3; i++) | |
| subgroup_bbox_origin[i] | u(v) |
| for(i=0; i<3; i++) | |
| subgroup_bbox_size[i] | u(v) |
| } | |
| ref_layer_group_id | u(8) |
| if(subgroup_enabled_flag[layer_group_id]) | |
| ref_subgroup_id | u(8) |
| context_reference_indication_flag | u(1) |
| if(context_reference_indication_flag){ | |
| num_subsequent_data_units | u(8) |
| subsequent_data_unit_list_resent_flag | u(1) |
| if(subsequent_data_unit_list_resent_flag){ | |
| number_of_layer_groups | u(4) |
| for(i=0; i<number_of_layer_groups; i++){ | |
| subsequent_layer_group_id[i] | u(4) |
| number_of_subgroups[i] | u(4) |
| for(j=0; j<number_of_subgroups[i]; j++) | |
| subsequent_subgroups_id[i][j] | u(4) |
| } | |
| } | |
| } | |
| byte_alignment() | |
| } | |

71

# FIG. 38

| dependent_attribute_data_unit_header(){ | Descriptor |
|---|---|
| ...... | u(4) |
| context_reference_indication_flag | u(1) |
| if(context_reference_indication_flag){ | |
| num_subsequent_data_units | u(8) |
| subsequent_data_unit_list_present_flag | u(1) |
| if(subsequent_data_unit_list_present_flag){ | |
| number_of_layer_groups | u(4) |
| for(i=0; i<number_of_layer_groups; i++){ | |
| subsequent_layer_group_id[i] | u(4) |
| number_of_subgroups[i] | u(4) |
| for(j=0; j<number_of_subgroups[i]; j++) | |
| subsequent_subgroups_id[i][j] | u(4) |
| } | |
| } | |
| } | |
| byte_alignment() | |
| } | |

# FIG. 39A

| layer_group_structure_inventory( ) { | Descriptor |
|---|---|
| lgsi_seq_parameter_set_id | u(4) |
| lgsi_frame_ctr_lsb_bits | u(5) |
| lgsi_frame_ctr_lsb | u(V) |
| lgsi_num_slice_ids_minus1 | u(8) |
| if(lgsi_num_slice_ids_minus1 >= 0 ) { | |
| for(sId=0; sId<=lgsi_num_slice_ids_minus1; sId++){ | |
| lgsi_slice_id[sId] | u(v) |
| lgsi_num_layer_groups_minus1[sId] | u(8) |
| lgsi_subgroup_bbox_origin_bits_minus1[sId] | u(v) |
| lgsi_subgroup_bbox_size_bits_minus1[sId] | u(v) |
| for(i=0; i<=lgsi_num_layer_groups_minus1[sId]; i++){ | |
| lgsi_layer_group_id[sId][i] | u(8) |
| lgsi_num_layers_minus1[sId][i] | u(8) |
| lgsi_num_subgroup_minus1[sId][i] | u(16) |
| for(j=0; j<=lgsi_num_subgroups_minus1[sId][i]; j++){ | |
| lgsi_subgroup_id[sId][i][j] | u(16) |
| lgsi_parent_subgroup_id[sId][i][j] | u(16) |
| for(k=0; k<3; k++) | |
| lgsi_subgroup_bbox_origin[sId][i][j][k] | u(v) |
| for(k=0; k<3; k++) | |
| lgsi_subgroup_bbox_size[sId][i][j][k] | u(v) |

# FIG. 39B

| layer_group_struture_inventory( ) { | Descriptor |
|---|---|
| context_reference_indication_flag[i][j] | u(1) |
| if(context_reference_indication_flag[i][j]){ | |
| num_subsequent_data_units[i][j] | u(8) |
| subsequent_data_unit_list_present_flag[i][j] | u(1) |
| if(subsequent_data_unit_list_present_flag[i][j]){ | |
| number_of_layer_groups[i][j] | u(4) |
| for(m=0; m<number_of_layer_groups[i][j];m++){ | |
| subsequent_layer_group_id[i][j][m] | u(4) |
| number_of_subgroups[i][j][m] | u(4) |
| for(n=0; n<number_of_subgroups[i][j][m];n++) | |
| subsequent_subgroup_id[i][j][m][n] | u(4) |
| } | |
| } | |
| } | |
| } | |
| } | |
| } | |
| } | |
| lgsi_origin_bits_minus1 | ue(v) |
| for(k=0; k<3; k++) | |
| lgsi_origin_xyz[k] | se(v) |
| lgsi_origin_log2_scale | ue(v) |
| byte_alignment() | |
| } | |

# FIG. 40

EP 4 742 677 A1

# FIG. 41

**FIG. 42**

bitstream
↓

SPS, GPS, APS → | Scalable slice structure | ~42011 —— aligned_slice_structure_enabled_flag

42012
↓
| geom scalable layer estimation |

~42013
↓
| ranging geom slice id | —slice_id_offsets→

slice_id
↓
| geom slice selection | ~42014
↓
Selected geometry slices
↓
| Split bitstream | ~42015
↓↓
| Split concatenation | ~42016
↓            ↓
Arithmetic entropy    directcoded bitstream
coded bitstream

42017
⟨ If aligned_slice_structure_enabled_flag =1? ⟩ —No→

Yes
↓ 42018
| find corresponding attr slice id |
↓
slice_id
↓
| attr slice selection | ~42019
↓
Selected attribute slices

42020
↓
| attr scalable layer estimation |
↓ ~42021
| ranging attr slice id |

EP 4 742 677 A1

# FIG. 43

Point cloud data

↓

Generate layer-group structure

↓

Find reference structure

↓

Generate data unit header

↓

Used as a context reference? ──No──→

Yes ↓

Enable context_reference_indication_flag

↓

Set num_subsequent_data_units

↓

subsequent_data_unit_list_present_flag? ──No──→

Yes ↓

set list of subsequent data unit

↓

Encode data unit

↓

End of data unit? ──No──

Yes ↓

Coded bitstream

# FIG. 44

coded bitstream

⬇

Parse data unit header

⬇

Load context from context buffer
(Ref layer group id, ref subgroup id) ➝ Update context buffer counter
and/or list of used data units

⬇ (left branch) ⬇ (right branch)

Initiate decoder

⬇

If target number
== counter ➝ Yes

No ⬇

Decode data unit

⬇

If list_given ==
List_updated

Context_reference_
indication_flag == 1 ➝ No

Yes ⬇

Yes ⬇

Save contexts to buffer

⬇

Clear/reset context buffer
(ref layer group id, ref subgroup id)

Set context buffer target number
and/or list of subsequent data units

⬇

Initialize context buffer counter
and/or list of used data units

⬇

decoded data

# FIG. 45

# FIG. 46

# FIG. 47

# FIG. 48

Encoder (layer-group sliceing)  48001

Slice selector

Layer-group 1   Layer-group 2   Layer-group 3

decoder  48002

High-level view (Layer-group 1)

Mid-level view (Layer-group 1 + layer-group 2)

Low-level view (Layer-group 1 + layer-group 2 + layer-group 3)

# FIG. 49

Encode point cloud data — S4900

Transmit bitstream containing
point cloud data — S4901

# FIG. 50

Receive bitstream containing
point cloud data — S5000

Decode point cloud data — S5001

## INTERNATIONAL SEARCH REPORT

| International application No. |
| --- |
| **PCT/KR2024/009449** |

**A. CLASSIFICATION OF SUBJECT MATTER**

**H04N 19/597**(2014.01)i; **H04N 19/119**(2014.01)i; **H04N 19/70**(2014.01)i; **H04N 19/423**(2014.01)i; **H04N 19/184**(2014.01)i

According to International Patent Classification (IPC) or to both national classification and IPC

**B. FIELDS SEARCHED**

Minimum documentation searched (classification system followed by classification symbols)

H04N 19/597(2014.01); G06T 7/10(2017.01); G06T 9/00(2006.01); H04N 13/161(2018.01); H04N 13/194(2018.01); H04N 19/184(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드 데이터(point cloud data), 지오메트리(geometry), 어트리뷰트(attribute), 세부 슬라이스(fine slice), 컨텍스트(context), 서브그룹(subgroup), 인덱스(index)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2021-0020815 A (LG ELECTRONICS INC.) 24 February 2021 (2021-02-24) See paragraphs [0426], [0865], [0868] and [0870]; and figure 1. | 1-2,8-11,15 |
| Y | | 3,12 |
| A | | 4-7,13-14 |
| Y | KR 10-2021-0151865 A (TENCENT AMERICA LLC) 14 December 2021 (2021-12-14) See paragraph [0005]. | 3,12 |
| A | KR 10-2021-0089573 A (LG ELECTRONICS INC.) 16 July 2021 (2021-07-16) See claims 1 and 8. | 1-15 |
| A | KR 10-2021-0074278 A (VID SCALE, INC.) 21 June 2021 (2021-06-21) See paragraphs [0254] and [0257]. | 1-15 |

☑ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 October 2024** | **16 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/009449**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2023-0021675 A (BEIJING XIAOMI MOBILE SOFTWARE CO., LTD. et al.) 14 February 2023 (2023-02-14)<br>    See claim 1. | 1-15 |

Form PCT/ISA/210 (second sheet) (July 2022)

## INTERNATIONAL SEARCH REPORT
### Information on patent family members

International application No.

**PCT/KR2024/009449**

| Patent document cited in search report | | | Publication date (day/month/year) | Patent family member(s) | | | Publication date (day/month/year) |
|---|---|---|---|---|---|---|---|
| KR | 10-2021-0020815 | A | 24 February 2021 | KR | 10-2423498 | B1 | 22 July 2022 |
| | | | | WO | 2021-029662 | A1 | 18 February 2021 |
| KR | 10-2021-0151865 | A | 14 December 2021 | AU | 2021-257883 | A1 | 23 December 2021 |
| | | | | CA | 3136030 | A1 | 03 December 2021 |
| | | | | CA | 3136030 | C | 20 February 2024 |
| | | | | CN | 114096998 | A | 25 February 2022 |
| | | | | EP | 3966785 | A1 | 16 March 2022 |
| | | | | EP | 3966785 | A4 | 31 August 2022 |
| | | | | JP | 2022-540279 | A | 15 September 2022 |
| | | | | JP | 7337193 | B2 | 01 September 2023 |
| | | | | KR | 10-2592986 | B1 | 20 October 2023 |
| KR | 10-2021-0089573 | A | 16 July 2021 | CN | 117978993 | A | 03 May 2024 |
| | | | | CN | 117978994 | A | 03 May 2024 |
| | | | | EP | 4075797 | A1 | 19 October 2022 |
| | | | | EP | 4075797 | A4 | 31 May 2023 |
| | | | | JP | 2023-509086 | A | 06 March 2023 |
| | | | | JP | 2024-096948 | A | 17 July 2024 |
| | | | | JP | 7477617 | B2 | 01 May 2024 |
| | | | | KR | 10-2344072 | B1 | 28 December 2021 |
| | | | | US | 11341687 | B2 | 24 May 2022 |
| | | | | US | 2021-0209807 | A1 | 08 July 2021 |
| | | | | WO | 2021-141264 | A1 | 15 July 2021 |
| KR | 10-2021-0074278 | A | 21 June 2021 | AU | 2021-342612 | A1 | 22 April 2021 |
| | | | | AU | 2024-205823 | A1 | 05 September 2024 |
| | | | | CN | 118447142 | A | 06 August 2024 |
| | | | | EP | 3853822 | A1 | 28 July 2021 |
| | | | | JP | 2022-501898 | A | 06 January 2022 |
| | | | | JP | 2024-079755 | A | 11 June 2024 |
| | | | | JP | 7460611 | B2 | 02 April 2024 |
| | | | | US | 11568573 | B2 | 31 January 2023 |
| | | | | US | 2022-0051443 | A1 | 17 February 2022 |
| | | | | US | 2023-0119983 | A1 | 20 April 2023 |
| | | | | WO | 2020-060813 | A1 | 26 March 2020 |
| KR | 10-2023-0021675 | A | 14 February 2023 | CN | 115529463 | A | 27 December 2022 |
| | | | | EP | 3929874 | A1 | 29 December 2021 |
| | | | | EP | 3929874 | A4 | 29 December 2021 |
| | | | | JP | 2023-531706 | A | 25 July 2023 |
| | | | | US | 2023-0224506 | A1 | 13 July 2023 |
| | | | | WO | 2021-258373 | A1 | 30 December 2021 |

Form PCT/ISA/210 (patent family annex) (July 2022)